# EUROPEAN PATENT APPLICATION

(11) **EP 3 141 533 A1**
(43) Date of publication of application: **15.03.2017**
(21) Application number: 15788768.8
(22) Date of filing: 28.04.2015
(51) Int. Cl.: C03C 17/25, B60J 1/00

(54) **GLASS ARTICLE**

(30) Priority: 08.05.2014 JP 2014096525
(71) Applicant: Asahi Glass Company, Limited, Tokyo 100-8405 (JP)
(72) Inventor: MORITA Shimpei, Tokyo 100-8405 (JP); KODAIRA Hirokazu, Tokyo 100-8405 (JP); YONEDA Takashige, Tokyo 100-8405 (JP)
(74) Representative: Müller-Boré & Partner Patentanwälte PartG mbB
(86) International application number: PCT/JP2015/062846
(87) International publication number: WO 2015/170647

(57) **Abstract**

There is provided a glass article having an ultraviolet absorbing film having high ultraviolet absorbency and not causing a decrease of visible light transmittance due to the high ultraviolet absorbency. A glass article includes: a glass substrate; and an ultraviolet absorbing layer provided on at least part of a main surface of the glass substrate and containing an ultraviolet absorber (a) including one or more selected from a benzophenone-based compound, a triazine-based compound, and a benzotriazole-based compound, a silicon oxide-based matrix component (b), and hollow particles (c) each having an outer shell and a hollow portion surrounded by the outer shell, wherein the content of the hollow particles is 55 mass% or less to the total mass of the ultraviolet absorbing layer, and a total volume of the hollow portions that the hollow particles have is 1% or more to a total volume of the ultraviolet absorbing layer.

## Description

### TECHNICAL FIELD

The present invention relates to a glass article having an ultraviolet absorbing layer.

### BACKGROUND

In recent years, on a transparent substrate such as window glass for vehicles such as automobiles and window glass for building materials to be attached to architectures such as houses and buildings, an ultraviolet absorbing film having the ability to absorb ultraviolet rays entering the vehicle or the building through such a substrate and having mechanical durability such as abrasion resistance has been attempted to be formed.

In order to obtain the aforesaid ultraviolet absorbing film having high abrasion resistance and ultraviolet absorbing ability, attempts have been conventionally made to form a silica-based ultraviolet absorbing film on the substrate, using a liquid composition in which an organic ultraviolet absorber is compounded with a silane compound. For example, in Patent Reference 1, attempts are made to form a silica-based ultraviolet absorbing film on a transparent substrate, using a coating solution containing a hydrolyzable silane compound and a compound in which a hydrolyzable silyl group is introduced in an organic ultraviolet absorber.

However, since the aforesaid silica-based ultraviolet absorbing film absorbs not only ultraviolet rays but also visible light, though only slightly, its use in glass articles required to have high visible light transmittance, such as, for example, a vehicle windshield has a problem of decreasing the visible light transmittance.

### PRIOR ART REFERENCE

### PATENT REFERENCE

Patent Reference 1: International Publication No. WO 2010/131744

### SUMMARY OF THE INVENTION

### PROBLEMS TO BE SOLVED BY THE INVENTION

The present invention has been made from the above viewpoint, and an object thereof is to provide a glass article having an ultraviolet absorbing film having high ultraviolet absorbency and not causing a decrease of visible light transmittance due to the high ultraviolet absorbency.

### MEANS FOR SOLVING THE PROBLEMS

The present invention provides a glass article with the following configurations.
[1] A glass article including: a glass substrate; and an ultraviolet absorbing layer provided on at least part of a main surface of the glass substrate, and the layer containing an ultraviolet absorber (a) including one or more selected from the group consisting of a benzophenone-based compound, a triazine-based compound, and a benzotriazole-based compounds, a silicon oxide-based matrix component (b), and hollow particles (c) each having an outer shell and a hollow portion surrounded by the outer shell, wherein a content of the hollow particles (c) is 55 mass% or less to the total mass of the ultraviolet absorbing layer, and a total volume of the hollow portions which the hollow particles (c) have is 1% or more to a total volume of the ultraviolet absorbing layer.
[2] The glass article according to [1], wherein a primary particle diameter of the hollow particles (c) is 5 to 150 nm, and a thickness of the outer shells of the hollow particles (c) as represented by (the primary particle diameter - a diameter of the hollow portion)/2 is 1 to 20 nm.
[3] The glass article according to [1] or [2], wherein a material of the outer shells of the hollow particles (c) including at least one selected from the group consisting of a silica, a polymer, and a metal oxide.
[4] The glass article according to any one of [1] to [3], further containing an infrared absorber (d) including one or more selected from the group consisting of a tin-doped indium oxide, an antimony-doped tin oxide, and a composite tungsten oxide.
[5] The glass article according to anyone of [1] to [4], including the ultraviolet absorbing layers on both main surfaces of the glass substrate.
[6] The glass article according to any one of [1] to [5], wherein the silicon oxide-based matrix component (b) is a cured product of a hydrolyzable silicon compound (Rb) including a tetrafunctional alkoxysilane compound.
[7] The glass article according to any one of [1] to [6], wherein the ultraviolet absorbing layer further contains polyepoxides.
[8] The glass article according to any one of [1] to [7], wherein visible light transmittance measured according to JIS R3212 (1998) is 70% or more, and ultraviolet transmittance measured according to ISO-9050 (1990) is 3% or less.
[9] The glass article according to any one of [1] to [8], wherein the ultraviolet absorbing layer has a thickness of 1.0 to 7.0 µm.

### EFFECTS OF THE INVENTION

The glass article of the present invention has the ultraviolet absorbing film that has both high ultraviolet absorbency and visible light transmittance, and thus is a glass article that has excellent ultraviolet absorbency yet has an increased visible light transmittance or suffers only a little decrease of visible light transmittance. In addition, it has decreased visible light reflectance and thus exhibits an effect of preventing reflections in the glass.

### MODES FOR CARRYING OUT THE INVENTION

Embodiments of the present invention will be described below.
A glass article of the present invention includes: a glass substrate; and an ultraviolet absorbing layer provided on at least part of a main surface of the glass substrate and containing the following (a) to (c) components. In this specification, the following components are sometimes indicated only by signs, for example, an ultraviolet absorber (a) is sometimes indicated by an (a) component.
Ultraviolet absorber (a); an ultraviolet absorber including one or more selected from a benzophenone-based compound, a triazine-based compound, and a benzotriazole-based compound,
Silicon oxide-based matrix component (b), and
Hollow particles (c); particles each having an outer shell and a hollow portion surrounded by the outer shell, with its content being 55 mass% or less to the total mass of the ultraviolet absorbing layer, and with the total volume of the hollow portions that the hollow particles (c) have being 1% or more to the total volume of the ultraviolet absorbing layer.

A material and the shape of the glass substrate used in the glass article of the present invention are appropriately selected, according to the intended use of the ultraviolet absorbing layer-equipped glass article. Examples of the material of the glass substrate include ordinarily used soda lime glass, aluminosilicate glass, borosilicate glass, alkali-free glass, and quartz glass. As the glass, substrate, a glass substrate that absorbs ultraviolet rays or infrared rays is also usable. The shape of the glass substrate may be a flat plate shape, or its entire surface or part thereof may have curvature. The thickness of the glass substrate can be appropriately selected according to the intended use of the glass article, and typically, is preferably 1 to 10 mm. The glass substrate may be laminated glass in which a plurality of glass plates are bonded with an intermediate film therebetween.

In order for the glass article having the ultraviolet absorbing layer to maintain visible light transmittance at a predetermined value or more, visible light transmittance of the glass substrate as measured according to JIS R3212 (1998) is preferably 70% or more, and more preferably 74% or more.

The glass article of the present invention has the ultraviolet absorbing layer provided on at least part of the main surface of the glass substrate and containing the aforesaid (a) to (c) components as essential components. In the ultraviolet absorbing layer, the silicon oxide-based matrix component (b) forms a Si-O-Si bond to constitute a three-dimensional matrix, and the ultraviolet absorber (a) and the hollow particles (c) are dispersed and held in the matrix. By containing the ultraviolet absorber (a), the ultraviolet absorbing layer has ultraviolet absorbing ability, and in addition, by containing the hollow particles (c) in the aforesaid range, the ultraviolet absorbing layer has a state where the hollow portions of the hollow particles (c) form independent minute spaces and thus the independent minute spaces are moderately dispersed in the layer, and accordingly has high visible light transmittance.

As will be described later, in the manufacture of the ultraviolet absorbing layer, it is formed using a liquid composition which is prepared by adding a solvent to the components themselves forming the ultraviolet absorbing layer or to their raw materials. As for the silicon oxide-based matrix component (b), a hydrolyzable silane compound (Rb) which is its raw material component is typically compounded in the liquid composition. In the process of forming the ultraviolet absorbing layer, the hydrolyzable silane compound (Rb) forms the siloxane bond through a hydrolysis and condensation reaction and is cured to be the silicon oxide-based matrix component (b).

In the present specification, "hydrolyzable silane compound" is used as a term including an unreacted hydrolyzable silane compound, one kind of its partially hydrolyzed condensate, and two kinds or more of its partially hydrolyzed co-condensates unless otherwise specified. When a specific "hydrolyzable silane compound", for example, a hydrolyzable silane compound (c), is mentioned, this is used as a term including an unreacted hydrolyzable silane compound (c), a partially hydrolyzed condensate thereof, and a unit of the hydrolyzable silane compound (c) in a partially hydrolyzed co-condensate with another hydrolyzable silane compound. Further, terms "(meth)acrylic..." and "(meth)acryloxy ..." in (meth)acrylic ester and (meth)acryloxy group are terms meaning both "acrylic..." and "methacrylic..., and both "acryloxy ..." and "methacryloxy ...", respectively.

The ultraviolet absorber (a) is compounded, for example, as the ultraviolet absorber (a) as it is in the liquid composition in some case, or a silylated ultraviolet absorber (Ra) having reactivity with the hydrolyzable silane compound (Rb) is compounded as a raw material component of the ultraviolet absorber (a) in some other case. The hollow particles (c) are compounded as the hollow particles (c) as they are in the liquid composition. The (a) to (c) components will be described in detail below.

### (Ultraviolet absorber (a))

The ultraviolet absorber (a) contained in the ultraviolet absorbing layer includes one or more selected from the benzophenone-based compound, the triazine-based compound, and the benzotriazole-based compound.

Specific examples of the benzotriazole-based compound include 2-[5-chloro(2H)benzotriazol-2-yl]-4-methyl-6-(tert-butyl)phenol (as a commercially available product, TINUVIN 326 (trade name, manufactured by Ciba Japan K.K.), etc.), octyl-3-[3-tert-4-hydroxy-5-[5-chloro-2H-benzotriazol-2-yl]propionate, 2-(2H-benzotriazol-2-yl)-4,6-di-tert-pentylphenol, 2-(2-hydroxy-5-methylphenyl)benzotriazole, 2-[2-hydroxy-3-(3,4,5,6-tetrahydrophthalimide-methyl)-5-methylphenyl]benzotriazole, 2-(2-hydroxy-5-tert-octylphenyl)benzotriazole, 2-(2-hydroxy-5-tert-butylphenyl)-2H-benzotriazole, methyl3-(3-(2H-benzotriazol-2-yl)-5-t-butyl-4-hydroxyphenyl)propionate, 2-(2H-benzotriazol-2-yl)-4,6-bis(1-methyl-1-phenylethyl)phenol, and 2-(2H-benzotriazol-2-yl)-6-(1-methyl-1-phenylethyl)-4-(1,1,3,3-tetramethylbutyl)phenol. Among these, 2-[5-chloro(2H)-benzotriazol-2-yl]-4-methyl-6-(tert-butyl)phenol is preferably used.

Specific examples used as the triazine compound include 2-[4-[(2-hydroxy-3-dodecyloxypropyl)oxy]-2-hydroxyphenyl]-4,6-bis(2,4-dimethylphenyl) -1,3,5-triazine,
2-[4-[(2-hydroxy-3-(2'-ethyl)hexyl)oxy]-2-hydroxyphenyl]-4,6-bis(2.4-dimethylphenyl)-1, 3,5-triazine, 2,4-bis(2-hydroxy-4-butoxyphenyl)-6-(2,4-bis-butoxyphenyl)-1,3,5-triazine, 2-(2-hydroxy-4-[1-octylcarbonylethoxy]phenyl)-4,6-bis(4-phenylphenyl)-1,3,5-triazine, and TINUVIN477 (trade name, manufactured by Ciba Japan KK). Among these, 2-(2-hydroxy-4-[1-octylcarbonylethoxy]phenyl)-4,6-bis(4-phenylphenyl)-1,3,5-triazine is preferably used.

Specific examples of the benzophenone-based compound include 2,4-dihydroxybenzophenone, 2,2',3(or any one of 4, 5, and 6)-trihydroxybenzophenone, 2,2',4,4'-tetrahydroxybenzophenone, 2,4-dihydroxy-2',4'-dimethoxybenzophenone, and 2-hydroxy-4-n-octoxybenzophenone. Among these, 2,2',4,4'-tetrahydroxybenzophenone is preferably used.

In the present invention, as the ultraviolet absorber (a), any one kind out of these compounds is usable alone, or a combination of two kinds or more of these is also usable. The ultraviolet absorber (a) contained in the ultraviolet absorbing layer is basically the compound itself compounded in the liquid composition for forming the ultraviolet absorbing layer. That is, the ultraviolet absorber (a) compounded in the liquid composition is not involved in a reaction and so on in the process of forming the ultraviolet absorbing layer. As the ultraviolet absorber (a), a hydroxy group-containing benzophenone-based compound is preferably used among the compounds exemplified above because it has high solubility in a solvent and its absorption wavelength band is in a desirable range Furthermore, a combination of an ultraviolet absorbing material other than these with one or more selected from the aforesaid benzophenone-based compound, triazine-based compound, and benzotriazole-based compound may be used as the ultraviolet absorber (a) as required within a range not impairing the effect of the present invention.

As the ultraviolet absorber (a), a compound soluble in the later-described solvent typically contained in the liquid composition is preferable. In a case where an ultraviolet absorbing compound having no or low solubility in the solvent is used as the ultraviolet absorber (a), it is preferable to disperse the ultraviolet absorber (a) as fine particles in a dispersion medium to prepare a dispersion, and make the dispersion contained in the liquid composition. Furthermore, in order to improve dispersibility of the fine particles of the ultraviolet absorber (a) in the ultraviolet absorbing layer, the dispersion in which the fine particles of the ultraviolet absorber (a) are dispersed is preferably a dispersion in which the fine particles are dispersed using a dispersing agent.

In the obtained composition, the dispersion medium in the dispersion of the fine particles of the ultraviolet absorber (a) constitutes part of the solvent contained in the composition, and thus a compound similar to the later-described solvent or having compatibility with the solvent is preferably used as the dispersion medium.

The content of the ultraviolet absorber (a) in the ultraviolet absorbing layer is preferably 1 to 200 parts by mass, more preferably 5 to 180 parts by mass, and especially preferably 15 to 150 parts by mass, relative to 100 parts by mass of the silicon oxide-based matrix component (b), in order for the layer to have sufficient ultraviolet absorbing ability and mechanical strength.

Here, in order to prevent the ultraviolet absorber (a) from bleeding out from the ultraviolet absorbing layer, the reactive ultraviolet absorber (Ra) in which a hydrolyzable silyl group having reactivity with a hydrolyzable group that the hydrolyzable silane compound (Rb) has is introduced into the ultraviolet absorber (a) can be compounded in the liquid composition, for instance. Specifically, a silyl group having a hydrolyzable group is introduced into the benzophenone-based compound, the triazine-based compound, and the benzotriazole-based compound by appropriate methods respectively, and at least one selected from the obtained compounds each containing the silyl group having the hydrolyzable group can be contained as the reactive ultraviolet absorber (Ra) in the liquid composition. Note that the ultraviolet absorber formed of the aforesaid compound containing the silyl group having the hydrolyzable group will be hereinafter referred to as the silylated ultraviolet absorber (Ra).

A reaction product of the aforesaid hydroxy group-containing benzophenone-based compound preferably used in the present invention and a hydrolyzable silane compound containing a group having reactivity with the hydroxy group, for example, containing an epoxy group (hereinafter this reaction product is also referred to as a "silylated benzophenone-based compound") is also usable as the silylated ultraviolet absorber (Ra). In the case where the silylated benzophenone-based compound is contained in the liquid composition together with the hydrolyzable silane compound (Rb), they are co-crosslinked through a hydrolysis reaction. Consequently, a hydroxy group-containing benzophenone-based compound residue originating in the silylated benzophenone-based compound is fixed to the silicon oxide matrix to be prevented from bleeding out. As a result, the obtained ultraviolet absorbing layer can maintain the ultraviolet absorbing ability for a long time.

Hereinafter, the silylated ultraviolet absorber (Ra) will be described, taking the silylated benzophenone-based compound as an example. As the hydroxy group-containing benzophenone-based compound which is a raw material of the silylated benzophenone-based compound, a benzophenone-based compound having two to four hydroxy groups, which is represented by the following general formula (a1), is preferably used because it has excellent ultraviolet absorbing ability even after silylated. Especially from a viewpoint of ultraviolet absorbing ability for long wavelengths up to 380 nm, the number of the hydroxy groups that the hydroxy group-containing benzophenone-based compound has is more preferably three or four. In this specification, the compound represented by the formula (a1) is sometimes referred to as a compound (al). The same applies to compounds represented by other formulas. 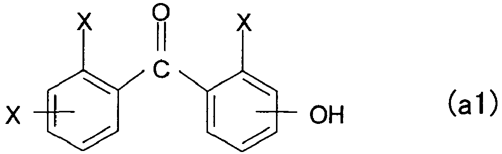 In the formula (a1), Xs represent hydrogen atoms or hydroxy groups that may be the same or different, at least one of which is the hydroxy group.

Further, among the hydroxy group-containing benzophenone-based compounds represented by the above general formula (a1), 2,4-dihydroxybenzophenone, 2,2',3(or any one of 4, 5, and 6)-trihydroxybenzophenone, 2,2',4,4'-tetrahydroxybenzophenone, and the like are more preferable, and particularly preferable is 2,2',4,4'-tetrahydroxybenzophenone. In the silylation reaction of the benzophenone compound having the hydroxy group, one kind of the hydroxy group-containing benzophenone compound or a mixture of two kinds or more of these is usable.

Examples of the hydrolyzable silane compound containing the group having reactivity with the hydroxy group, particularly the hydrolyzable silane compound containing the epoxy group, which is used in the silylation of the above hydroxy group-containing benzophenone-based compound, include a trifunctional or bifunctional hydrolyzable silane compound in which a nonhydrolyzable monovalent organic group having the epoxy group is bonded to a silicon atom. Its preferable examples include 3-glycidoxypropyltrimethoxysilane, 3-glycidoxypropylmethyldimethoxysilane, 3-glycidoxypropyltriethoxysilane, 3-glycidoxypropylmethyldiethoxysilane, 2-(3,4-epoxycyclohexyl)ethyltrimethoxysilane, 2-(3,4-epoxycyclohexyl)ethyl methyl dimethoxysilane, 2-(3,4-epoxycyclohexyl)ethyltriethoxysilane, and 2-(3,4-epoxycyclohexyl)ethyl methyl diethoxysilane.

Among these, 3-glycidoxypropyltrimethoxysilane, 2-(3,4-epoxycyclohexyl)ethyltrimethoxysilane, 3-glycidoxypropylmethyldimethoxysilane, 2-(3,4-epoxycyclohexyl)ethyl methyl diethoxysilane, and the like are especially preferably used as the epoxy group-containing hydrolyzable silane compound in the present invention, in view of their capability of improving solubility in the liquid composition, and so on. In the silylation reaction of the hydroxy group-containing benzophenone-based compound, one kind of the epoxy group-containing hydrolyzable silane compound is usable alone or a mixture of two kinds or more of these is usable.

As a method for producing the reaction product of the hydroxy group-containing benzophenone-based compound and the epoxy group-containing hydrolyzable silane compound, any ordinary method for the silylation reaction is usable without any particular limitation, and the following method is its specific example.

At least one kind of the hydroxy group-containing benzophenone-based compound is made to react with at least one kind of the epoxy group-containing hydrolyzable silane compound in the presence of a catalyst as required. An amount of the epoxy group-containing hydrolyzable silane compound used in the reaction is not particularly limited, and is preferably 0.5 to 5.0 moles, more preferably 1.0 to 3. 0 moles per 1 mole of the hydroxy group-containing benzophenone-based compound. If the amount of the epoxy group-containing hydrolyzable silane compound per 1 mole of the hydroxy group-containing benzophenone-based compound is less than 0.5 moles, the unsilylated hydroxy group-containing benzophenone-based compound is present in large amount in the film when the reaction product is added in the liquid composition, and thus may bleed out. Further, the film may not be able to maintain mechanical durability. On the other hand, if the amount of the epoxy group-containing hydrolyzable silane compound per 1 mole of the hydroxy group-containing benzophenone-based compound is more than 5.0 moles, an absolute amount of the hydroxy group-containing benzophenone-based compound which exhibits ultraviolet absorption is small, which may lead to deterioration of ultraviolet absorbency.

As the catalyst used in the above silylation, quaternary ammonium salt as described in JP58-10591A (1983) is preferable. Examples of the quaternary ammonium salt include tetramethylammonium chloride, tetraethylammonium chloride, benzyltrimethylammonium chloride, and benzyltriethylammonium chloride.

An amount of the catalyst added to the reaction system is not particularly limited, and is preferably such an addition amount that its ratio becomes 0.005 to 10 parts by mass, more preferably 0.01 to 5 parts by mass, relative to the total 100 parts by mass of the hydroxy group-containing benzophenone-based compound and the epoxy group-containing hydrolyzable silane compound. If the addition amount of the catalyst is less than 0.005 parts by mass to the total 100 parts by mass of the hydroxy group-containing benzophenone-based compound and the epoxy group-containing hydrolyzable silane compound, the reaction takes a long time. On the other and, if the addition amount is more than 10 parts by mass, the catalyst may cause a decrease of stability of the liquid composition when the reaction product is added to the liquid composition.

The above silylation reaction can be caused by heating a mixture of the hydroxy group-containing benzophenone-based compound and the epoxy group-containing hydrolyzable silane compound whose ratio is preferably as described above, at a temperature range of 50 to 150°C for four to twenty hours in the presence of the catalyst. This reaction may be caused in the absence of a solvent, or may be caused in a solvent in which the hydroxy group-containing benzophenone-based compound and the epoxy group-containing hydrolyzable silane compound are both soluble, and a method using the solvent is preferable in view of easy control of the reaction and easy handlability. Examples of such a solvent include toluene, xylene, ethyl acetate, and butyl acetate. An amount of the solvent used is, for example, about 10 to 300 parts by mass to the total 100 parts by mass of the hydroxy group-containing benzophenone-based compound and the epoxy group-containing hydrolyzable silane compound.

Examples of the silylated benzophenone-based compound preferably used in the present invention include a reaction product obtained through a reaction of one to two hydroxy groups of the benzophenone-based compound containing three or more hydroxy groups with the epoxy group of the epoxy group-containing hydrolyzable silane compound, and more preferable examples thereof include 4-(2-hydroxy-3-(3-(trimethoxysilyl)propoxy)propoxy)-2,2',4'-trihydroxybenzophenone represented by the following formula (Ra1). Note that Me in the following formula (Ra1) represents a methyl group.

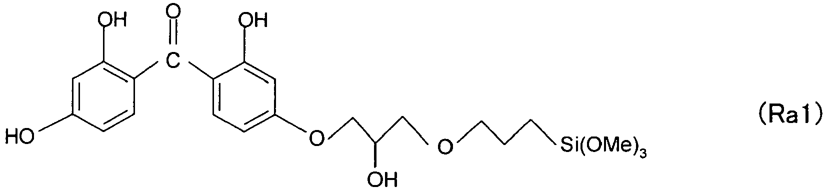

Incidentally, in the case where the liquid composition contains the aforesaid silylated benzophenone-based compound as the raw material component of the ultraviolet absorber (a), its content may be adjusted so that an amount calculated as follows becomes the aforesaid content of the ultraviolet absorber (a) in the ultraviolet absorbing layer.

Specifically, an amount of the silyl group having the hydrolyzable group in the silylated benzophenone-based compound, for example, an amount of -Si(OMe)3 in the compound (Ra1), is converted to a SiO₂ equivalent, and this amount is included in an amount of the later-described hydrolyzable silane compound (Rb). Then, an amount of a portion in the silylated benzophenone-based compound excluding the silyl group having the hydrolyzable group, that is, an amount of the hydroxy group-containing benzophenone-based compound residue including a linking group is defined as the content of the ultraviolet absorber (a). In this way, the part by mass of the ultraviolet absorber (a) to 100 parts by mass of the silicon oxide-based matrix component (b) calculated from the amount of the hydrolyzable silane compound (Rb) is calculated.

### (Silicon oxide-based matrix component (b))

The silicon oxide-based matrix component (b) contained in the ultraviolet absorbing layer is made of a cured product of the hydrolyzable silane compound (Rb). An amount of the silicon oxide-based matrix component (b) contained in the ultraviolet absorbing layer can be calculated from the content of the hydrolyzable silane compound (Rb) in the liquid composition. The content of the hydrolyzable silane compound (Rb) in the liquid composition is the SiO₂ content obtained when the content of silicon atoms included in the hydrolyzable compound (Rb) to the total solid content in the composition is converted to that of SiO₂. In the present specification, the content of the silicon oxide-based matrix component (b) in the ultraviolet absorbing layer is the SiO₂ equivalent content of the hydrolyzable silane compound (Rb) in the liquid composition, unless otherwise specified.

The content of the silicon oxide-based matrix component (b) is preferably 5 to 90 mass%, and more preferably 10 to 50 mass% to the total mass of the ultraviolet absorbing layer. By containing the silicon oxide-based matrix component (b) in the aforesaid range, the ultraviolet absorbing layer can have sufficient strength owing to the formation of a silica network.

Examples of the hydrolyzable silane compound (Rb) include compounds (Rb1) represented by the following formula (Rb1).

R^{H1}ₙ₁SiX¹₄₋ₙ₁ ... (Rb1)

In the formula (Rb1), n1 represents an integer of 0 to 3, R^{H1} represents a substituted or unsubstituted hydrocarbon group having 1 to 20 carbon atoms and no fluorine atom, and X¹ represents a hydrolyzable group. When the numbers of R^{H1} and X¹ are plural, they may be different from or identical to each other.

The compounds (Rb1) include a monofunctional to tetrafunctional hydrolyzable silane compound in which the number of the hydrolyzable groups (X¹) represented by "4-n1" is one to four. One kind out of the compounds (Rb1) may be used alone, or a combination of two kinds or more of these may be used. When one kind of the compound (Rb1) is used alone, a trifunctional or tetrafunctional hydrolyzable silane compound is typically used in order to form the three-dimensional siloxane bond. When the combination of two kinds or more is used as the compound (Rb1), a monofunctional hydrolyzable silane compound or a bifunctional hydrolyzable silane compound may be used in addition to the trifunctional and/or tetrafunctional hydrolyzable silane compound.

As the hydrolyzable group (X¹) that the compound (Rb1) has, specifically, organooxy groups such as an alkoxy group, an alkenyloxy group, an acyloxy group, an iminoxy group, and an aminoxy group are preferable, and the alkoxy group is especially preferable. As the alkoxy group, an alkoxy group having 1 to 4 carbon atoms and an alkoxy-substituted alkoxy group having 2 to 4 carbon atoms (2-methoxyethoxy group or the like) are preferable, and a methoxy group and an ethoxy group are especially preferable.

The tetrafunctional hydrolyzable silane compound is represented by SiX¹₄. The four hydrolyzable groups (X¹) may be different from or identical to one another. In this case, the hydrolyzable groups (X¹) are each preferably an alkoxy group, more preferably an alkoxy group having 1 to 4 carbon atoms, and more preferably a methoxy group and an ethoxy group. Specific examples of SiX¹₄ include tetramethoxysilane, tetraethoxysilane, tetra-n-propoxysilane, tetra-n-butoxysilane, tetra-sec-butoxysilane, and tetra-tert-butoxysilane. In the present invention, tetraethoxysilane, tetramethoxysilane, and the like are preferably used. One kind out of these may be used alone, or two kinds or more of these may be used in combination.

The aforesaid trifunctional hydrolyzable silane compound is a compound in which three hydrolyzable groups and one R^{H1} are bonded to the silicon atom. The three hydrolyzable groups may be identical to or different from one another. The hydrolyzable groups each are preferably an alkoxy group, more preferably an alkoxy group having 4 or less carbon atoms, and still more preferably a methoxy group and an ethoxy group.

R^{H1} is the substituted or unsubstituted hydrocarbon group having 1 to 20 carbon atoms and no fluorine atom. Examples of the unsubstituted hydrocarbon group include an alkyl group or an aryl group having 1 to 20 carbon atoms, and more preferably one to ten carbon atoms, and the alkyl group having 1 to 4 carbon atoms is especially preferable.

Specific examples of such a trifunctional hydrolyzable silane compound in which R^{H1} is the unsubstituted hydrocarbon group include methyltrimethoxysilane, methyltriethoxysilane, methyltris(2-methoxyethoxy)silane, methyltriacetoxysilane, methyltri-n-propoxysilane, methyltriisopropenoxysilane, methyltri-n-butoxysilane, ethyltrimethoxysilane, ethyltriethoxysilane, phenyltrimethoxysilane, phenyltriethoxysilane, and phenyltriacetoxysilane. One kind out of these may be used alone, or a combination of two kinds or more of these may be used.

Examples of a substituent that R^{H1} may have include an epoxy group, a (meth)acryloxy group, a primary or secondary amino group, an oxetanyl group, a vinyl group, a styryl group, a ureido group, a mercapto group, an isocyanate group, a cyano group, and a halogen atom. The epoxy group, the (meth)acryloxy group, the primary or secondary amino group, the oxetanyl group, the vinyl group, the ureido group, the mercapto group, and the like are preferable. The epoxy group, the primary or secondary amino group, and the (meth) acryloxy group are especially preferable.

As the group having the epoxy group, a glycidoxy group and a 3,4-epoxycyclohexyl group are preferable, and as the primary or secondary amino group, an amino group, a monoalkylamino group, a phenylamino group, an N-(aminoalkyl)amino group, and the like are preferable.

Specific examples of the trifunctional hydrolyzable silane compound whose R^{H1} is the substituted hydrocarbon group include 3-glycidoxypropyltrimethoxysilane, 3-glycidoxypropyltriethoxysilane, 2-(3,4-epoxycyclohexyl)ethyltrimethoxysilane, 2-(3,4-epoxycyclohexyl)ethyltriethoxysilane, 3-methacryloxypropyltrimethoxysilane, and di-(3-methacryloxy)propyltriethoxysilane. In view of reactivity with the silane compound, 3-glycidoxypropyltrimethoxysilane, 3-glycidoxypropyltriethoxysilane, 2-(3,4-epoxycyclohexyl)ethyltrimethoxysilane, 2-(3,4-epoxycyclohexyl)ethyltriethoxysilane, and the like are especially preferable. One kind out of these may be used alone, or a combination of two kinds or more of these may be used.

The hydrolyzable silane compound (Rb) is preferably (1) composed only of the tetrafunctional hydrolyzable silane compound or (2) composed of the tetrafunctional hydrolyzable silane compound and the trifunctional hydrolyzable silane compound. In the present invention, it is especially preferably (1) composed of only the tetrafunctional hydrolyzable silane compound. In the case of (1), the ultraviolet absorbing layer preferably further contains a later-described flexible component (e) especially in order to obtain sufficient crack resistance while having a predetermined thickness. In the case of (2), a content ratio between the tetrafunctional hydrolyzable silane compound and the trifunctional hydrolyzable silane compound in terms of a mass ratio of the tetrafunctional hydrolyzable silane compound/the trifunctional hydrolyzable silane compound is preferably 30/70 to 95/5, more preferably 40/60 to 90/10, and especially preferably 50/50 to 85/15.

Further, the aforesaid bifunctional hydrolyzable silane compound is optionally used as required in (1) and (2). The content thereof in mass% is preferably 30 mass% or less to the total amount of the hydrolyzable silane compound (Rb).

Here, the hydrolyzable silane compound (Rb) at least part of which is partially hydrolyzed and (co-)condensed is more preferable than that made of only the unreacted hydrolyzable silane compound, that is, made of only a monomer of the hydrolyzable silane compound, in view of stability and homogeneous reactivity of the hydrolyzable silane compound in the liquid composition. Therefore, it is preferable that the hydrolyzable silane compound (Rb) is compounded in the liquid composition as a partially hydrolyzed condensate of the hydrolyzable silane compound (Rb) (monomer) or after the hydrolyzable silane compound (Rb) (monomer) is mixed with the other components contained in the liquid composition, at least part thereof is partially hydrolyzed and condensed to prepare the liquid composition.

The partially hydrolyzed (co-)condensate is an oligomer (multimer) generated through hydrolysis and subsequent dehydration condensation of the hydrolyzable silane compound. The partially hydrolyzed (co-)condensate is for example a high molecular weight substance having solubility high enough to dissolve in a solvent. The partially hydrolyzed (co-)condensate has a hydrolyzable group and/or a silanol group, and has a property to become the final cured product after further hydrolyzed and (co-)condensed. It is possible to obtain the partially hydrolyzed condensate only from a certain one kind of the hydrolyzable silane compound. Alternatively, from two kinds of more of the hydrolyzable silane compounds, it is also possible to obtain the partially hydrolyzed co-condensate which is their co-condensate.

To cause the partial hydrolysis and (co-)condensation of the hydrolyzable silane compound, a reaction solution in which water is added to a lower alcohol solution of the hydrolyzable silane compound is stirred at 10 to 70°C for 1 to 48 hours in the presence of an acid catalyst, for instance. Specific examples of the acid catalyst used in the reaction include: inorganic acids such as nitric acid, hydrochloric acid, sulfuric acid, and phosphoric acid; carboxylic acids such as formic acid, acetic acid, propionic acid, glycolic acid, oxalic acid, malonic acid, succinic acid, maleic acid, phthalic acid, citric acid, and malic acid; and sulfonic acids such as methanesulfonic acid.

An addition amount of the acid can be set without particular limitation within a range with which the acid can fulfill the function as the catalyst, but specifically, can be set to about 0.001 to 3.0 moles/L as an amount relative to a volume of the reaction solution containing the aforesaid hydrolyzable silane compound.

### (Hollow particles (c))

The ultraviolet absorbing layer contains the hollow particles (c) each having the outer shell and the hollow portion surrounded by the outer shell, with their amount being 55 mass% or less to the total mass of the ultraviolet absorbing layer and with the total volume of the hollow portions that the hollow particles (c) have being within a range of 1% or more to the total volume of the ultraviolet absorbing layer.

The ultraviolet absorbing layer have excellent visible light transmittance by containing the hollow particles (c) in such an amount that the total volume of their hollow portions becomes 1 % or more to the total volume of the ultraviolet absorbing layer, though depending on the material, size, or the like of the hollow particles (c). A ratio of the total volume of the hollow portions of the hollow particles (c) to the total volume of the ultraviolet absorbing layer (hereinafter, referred to as porosity) is 1% or more and preferably 3% or more. As the ratio of the hollow portions of the hollow particles (c) occupying the ultraviolet absorbing layer is higher, higher visible light transmittance is obtained. This is thought to be an effect obtained as a result of a decrease of a loss due to reflection of light mainly in a 500 to 600 nm wavelength range.

On the other hand, if the content of the hollow particles (c) in the ultraviolet absorbing layer is too high, haze increases. Therefore, an upper limit of the content of the hollow particles (c) in the ultraviolet absorbing layer is 55 mass% to the total mass of the ultraviolet absorbing layer.

The primary particle diameter of the hollow particles (c) is preferably 3 to 200 nm, more preferably 5 to 150 nm, and especially preferably 10 to 100 nm, though depending on the material of the hollow particles and the size of the hollow portions. If the primary particle diameter of the hollow particles (c) is smaller than 3 nm, it is difficult to increase the porosity of the ultraviolet absorbing layer, and sufficient visible light transmittance may not be obtained. If the primary particle size is larger than 200 nm, they may scatter visible light to cause a decrease of the transmittance.

The shape of the hollow particles (c) is not particularly limited, and specific examples of their shape include a spherical shape, a rod shape, a spindle shaped, and a columnar shape. In the present invention, it is also possible to use a mixture of the hollow particles having these shapes, and the use of the spherical hollow particles alone is preferable. In the present specification, the term "diameter" refers to an average value of a major axis and a minor axis when the hollow particles have a shape other than the spherical shape. The "spherical shape" refers to a shape whose aspect ratio is 1 to 2.

The hollow particles (c) each have the outer shell (hereinafter sometimes referred to as "shell") and the hollow portion surrounded by the outer shell (hereinafter, sometimes simply referred to as "hollow portion"). The primary particle diameter of the hollow particles (c) is referred to as an outside diameter, and the diameter of the hollow portions is referred to as an inside diameter. The thickness of the outer shells of the hollow particles (c) represented by (outside diameter - inside diameter)/2 of the hollow particles (c) is preferably 1 to 20 nm, and more preferably 2 to 10 nm. If the thickness of the outer shells of the hollow particles is less than 1 nm, the outer shells are easily broken, and it may not be possible to maintain the spaces formed by the hollow portions of the hollow particles (c) in the ultraviolet absorbing layer. On the other hand, if the thickness of the outer shells is larger than 20 nm, it is difficult to increase the porosity of the ultraviolet absorbing layer and it may not be possible to obtain sufficient visible light transmittance.

In the hollow particles (c), with the thickness of the outer shells of the hollow particles (c) being represented by (t) and the inside diameter being represented by (d), a ratio (d)/(t) of the inside diameter (d) to the thickness (t) of the outer shells is preferably 0.3 to 40, and more preferably 1 to 30. If (d)/(t) of the hollow particles (c) is less than 0.3, it is difficult to increase the porosity of the ultraviolet absorbing layer, and if it is larger than 40, smoothness of the surface of the ultraviolet absorbing layer may be impaired, or it may not be possible to maintain the spaces formed by the hollow portions of the hollow particles (c) due to breakage of the outer shells.

In the present specification, the primary particle diameter of the hollow particles (c) (outside diameter), the diameter of the hollow portions (inside diameter), and the thickness of the outer shells refer to average values obtained when the hollow particles as samples are observed with a transmission electron microscope, 100 hollow particles are randomly picked out, the outside diameters and the inside diameters of the 100 hollow particles are measured, the thicknesses of the outer shells are calculated, and the measured/calculated values for the 100 particles are averaged. Incidentally, in a case where the hollow particles (c) have substantially a perfect spherical shape, the outside diameter refers to the diameter of the hollow particles, and the inside diameter refers to the diameter of the hollow portions.

A material forming the outer shells of the hollow particles (c) is not particularly limited, as long as it can be formed to have the above-described outside diameter, inside diameter, thickness of the outer shell, shape, and so on. Specific examples of such a material include: silica; polymers such as an acrylic resin, a styrol resin (polystyrene), an epoxy resin, and a silicone resin; and metal oxides such as alumina, titania, zirconia, and zinc oxide. The polymer is preferably the acrylic resin. Specific examples of the acrylic resin include a homopolymer of (meth)acrylic acid alkyl ester, and a copolymer of (meth)acrylic acid alkyl ester and a monomer copolymerizable with the (meth)acrylic acid alkyl ester. Among these, polymethyl methacrylate (PMMA) is preferable.

As the material forming the outer shells of the hollow particles (c), a material having a 1.6 refractive index (589 nm) or less is preferable from the viewpoint of maintaining the visible light transmittance of the ultraviolet absorbing layer at a predetermined level. In the present specification, the refractive index refers to a refractive index for light with a 589 nm wavelength unless otherwise specified. Among these, silica is especially preferable as the material forming the outer shells of the hollow particles (c), from a viewpoint of improving adhesion with the other materials forming the ultraviolet absorbing layer, especially with the silicon oxide-based matrix component (b) by the formation of a silanol bond. One kind of the hollow particles (c) may be used alone, or a combination of two kinds or more of these different in the constituent material or size of the outer shells may be used.

A method of manufacturing the hollow particles (c) used in the present invention is not particularly limited, as long as the hollow particles (c) have the aforesaid properties. Specifically, the hollow particles (c) made of, for example, the silica or the metal oxide can be manufactured by a method of manufacture having the following (I) step to (III) step.
(I) a step of producing a hollow particle-forming liquid composition containing: core fine particles made of a soluble and/or decomposable material; and a precursor of the hollow particle shell material,
(II) a step of obtaining core-shell fine particles by forming the outer shells on surfaces of the core fine particles through, when necessary, the operation such as heating of the hollow particle-forming liquid composition, and
(III) a step of removing the core fine particles from the core-shell fine particles by dissolution or decomposition.

The core fine particles made of the soluble and/or decomposable material, which are used in the above (I) step, refer to core fine particles made of a material that is dissolved, decomposed, sublimated, or the like, by heat, acid, light, or the like, and specifically to core fine particles made of a material that can be removed by the treatment of dissolving or decomposing only the core fine particles without dissolving or decomposing the shells of the core-shell fine particles in the (III) step, though depending on the shell material used.

As such core fine particles, usable is one kind or a mixture of two kinds or more selected from: thermally decomposable organic polymer fine particles of surfactant micelles, a water-soluble organic polymer, a styrene resin, an acrylic resin, or the like; acid-soluble inorganic fine particles of sodium aluminate, calcium carbonate, basic zinc carbonate, zinc oxide, or the like; light-soluble inorganic fine particles of metal chalcogenide semiconductors of zinc sulfide and cadmium sulfide, or the like, or zinc oxide, or the like. Further, in the case where the aforesaid heating of the hollow particle-forming liquid composition in the (II) step is performed by microwave irradiation as described below, core fine particles made of a material having dielectric characteristics whose relative permittivity is 10 or more are preferable because this material not only has the aforesaid solubility and/or decomposability but also easily absorbs microwaves. Specific examples of such a material include zinc sulfide and zinc oxide.

The particle shape of the core fine particles used is not particularly limited, and examples thereof include the same shapes as those which are mentioned above as the shape of the hollow particles (c). The average primary particle diameter of the core fine particles (particle diameter in a non-aggregated state) can be selected in consideration of the adjustment of the dissolution/decomposition rate of cores in the later core fine particle dissolution/decomposition step and the adjustment of the size of the hollow portions of the obtained hollow particles. Considering the aforesaid primary particle size (average) of the hollow particles, the average primary particle diameter of the core fine particles is preferably 1 to 198 nm, and more preferably 5 to 100 nm.

Here, as the hollow particle-forming liquid composition produced in the above-described (I) step, a hollow particle-forming liquid composition in which the precursor of the hollow particle shell material is compounded in a dispersion in which the core fine particles are dispersed in a dispersion medium is typically used. The dispersion medium of the core fine particles is not particularly limited. Examples thereof include water, alcohols, ketones, esters, ethers, nitrogen-containing compounds, and sulfur-containing compounds. It is not essential that the dispersion medium of the core fine particles contains water, and in a case where, for example, the outer shells are formed through hydrolysis and polycondensation of the precursor of the hollow particle shell material, the water of the dispersion medium can be used as it is in this reaction, and therefore, the dispersion medium is preferably water alone or a mixed solvent of water and the aforesaid organic solvent. A content ratio of the water in the dispersion medium in this case is, for example, 5 to 100 mass% as a ratio of the water contained in 100 mass% of the dispersion medium.

The hollow particle-forming liquid composition produced in the above-described (I) step may further contain a dispersing agent in addition to the aforesaid core fine particles and dispersion medium and the later-described precursor of the hollow particle shell material. The solid content concentration in the hollow particle-forming liquid composition is preferably within a range of not more than 50 mass% nor less than 0.1 mass%, and more preferably not more than 30 mass% nor less than 1 mass%, in order for the dispersion to have stability. Further, the core fine particles may be monodisperse particles or may be aggregates.

Examples of the precursor of the hollow particle shell material contained in the hollow particle-forming liquid composition produced in the above-described (I) step include such as salts or alkoxides of Si or a metal specifically, Al and the like, which respectively are precursors of the silica and the metal oxide exemplified as the hollow particle shell material in the above. In order to obtain the hollow silica particles preferably used in the present invention, alkoxysilane is preferable among these because it forms dense silica outer shells. Examples of the alkoxysilane include tetramethoxysilane, tetraethoxysilane, tetra-n-propoxysilane, and tetraisopropoxysilane, and preferable is tetraethoxysilane because its reaction rate is appropriate. One kind out of these may be used alone or a combination of two kinds or more of these may be used. Further, a hydrolysate or a polymer of any of these compounds may also be used as the precursor.

The content of the precursor of the hollow particle shell material in the aforesaid hollow particle-forming liquid composition is preferably such an amount that the thickness of the finally formed outer shells becomes 1 to 20 nm, and more preferably such an amount that the thickness of the outer shells becomes 2 to 10 nm. Specifically, the amount of the precursor of the hollow particle shell material is preferably 0.1 to 10,000 parts by mass relative to 100 parts by mass of the core fine particles in terms of an amount of the hollow particle shell material.

Here, the hollow particle-forming liquid composition used when the hollow silica particles preferably used in the present invention are produced preferably contains a hydrolysis catalyst such as acid or alkali in addition to the above-described components. Further, pH of the hollow particle-forming liquid composition is preferably 9 to 11. This is because the silica outer shells can be formed in a short time and the aggregation of the produced silica itself is relatively difficult to occur. When the hollow particle-forming liquid composition is manufactured, an electrolyte such as magnesium hydroxide may be further added for the purpose of increasing ionic strength to facilitate forming the silica outer shells from the precursor of the silica, and pH can be adjusted using the electrolyte.

Next, the step (II) is performed which produces the core-shell particles by forming the outer shells on the surfaces of the core fine particles by, if necessary, the operation such as the heating of the hollow particle-forming liquid composition obtained in (I) step in this manner.

Examples of a method for forming the outer shells on the surfaces of the core fine particles include a method of covering the surfaces of the core fine particles with the shell material by putting the hollow particle-forming liquid composition containing the core fine particles, the dispersion medium thereof, and the precursor of the hollow particle shell material, under a reaction condition causing the precursor to react on the surfaces of the core fine particles to produce the hollow particle shell material, specifically, by performing a hydrolysis reaction under a heating condition, though depending on the precursor of the used hollow particle shell material.

Here, in the case where, for example, the outer shells are made of silica in the hollow particles used in the present invention, the heating temperature is preferably 20 to 100°C, and more preferably 30 to 80°C in order to obtain the hollow silica particles having the aforesaid properties used in the present invention. When the heating temperature (the temperature of the aforesaid hollow particle-forming liquid composition) is 20°C or higher, the outer shells can be formed in a short time. If the heating temperature is higher than 100°C, an amount of the silica precipitating in a region other than the surfaces of the core fine particles may increase. The heating time is appropriately adjusted according to the heating temperature. In a case where other outer shell material is used, the heating temperature and time are also appropriately adjusted so that the properties become suitable as the hollow particles used in the present invention.

After the outer shells are formed, the dispersion of the core fine particles having the obtained outer shells is preferably further heated, to density the outer shells. A method of the heating at this time is not particularly limited, as long as it is a method capable of producing the hollow particles having the properties used in the present invention, and examples thereof include methods such as direct heating by autoclaving and heating by microwave irradiation, and preferable is the heating by the microwave irradiation. The heating temperature (the temperature of the dispersion) at this time is preferably 100 to 500°C, and more preferably 120 to 300°C. When the heating temperature is 100°C or higher, the dense outer shells can be formed in a short time, and when it is 500°C or lower, temperature control is easy.

The microwave refers typically to an electromagnetic wave with a 1 G to 100 GHz frequency. Typically, a microwave with a 2.45 GHz frequency is used. In a case where the hollow particle-forming liquid composition obtained in the above-described (I) step is for producing the hollow silica fine particles, an output power of the microwave is preferably set so as to heat the dispersion of the core fine particles having the outer shells obtained in the above to 100 to 500°C, and more preferably 120 to 300°C. The irradiation time of the microwave may be adjusted to a time long enough to form the shells with a desired thickness, according to the output power of the microwave (the temperature of the dispersion), and in the case where, for example, the liquid composition is for producing the hollow silica particles, the irradiation time is ten seconds to twenty minutes under the aforesaid preferable microwave output condition.

Next, the (III) step of removing the core fine particles of the core-shell fine particles obtained in the (II) step by dissolution or by decomposition to obtain the hollow particles is performed.

The treatment for removing the core fine particles in the (III) step is performed according to the nature of the used core fine particles. In the case where, for example, the thermally decomposable organic polymer fine particles are used, the decomposition removal of the core fine particles is possible by heating under a condition causing the core fine particles thereof to decompose. In the case where the acid-soluble inorganic fine particles are used, the dissolution removal of the core fine particles is possible by adding acid such as various kinds of inorganic acids (hydrochloric acid, nitric acid, sulfuric acid, and the like), organic acids (formic acid, acetic acid, and the like), and an acidic cation exchange resin. In the case where the light-soluble inorganic fine particles are used, the decomposition removal of the core fine particles is possible by performing light irradiation under a condition causing the core fine particles thereof to decompose.

To confirm that the core fine particles have been removed, the obtained hollow particles are observed with a transmission electron microscope, or an amount of a core fine particle-originating component released into a reaction solution as a result of the decomposition or the dissolution is measured with a fluorescent X-ray measuring instrument or the like.

The hollow particles (c) used in the present invention are obtained in the form of the dispersion by the above-described method. Since various components are contained in the dispersion of the hollow particles (c) obtained in the above though depending on the manufacturing method, the hollow particles (c) are usually separated by refining by a known method. The hollow particles (c) may be compounded as they are in the liquid composition for forming the ultraviolet absorbing layer, but are preferably compounded in the liquid composition for forming the ultraviolet absorbing layer as a dispersion in which they are dispersed in an appropriate dispersion medium, for example, as a dispersion medium similar to the dispersion medium of the core fine particles used in the above-described (I) step of the manufacturing method. In this case, the hollow particles (c) may be monodisperse particles or may be aggregates. Typically, they are preferably aggregates in each of which a plurality of the hollow particles aggregate. The average particle diameter of the hollow particles in the dispersion as is found by a laser diffraction scattering method is preferably 20 to 150 nm.

### (Optional components)

Besides the ultraviolet absorber (a), the ultraviolet absorbing layer in the glass article of the present invention may optionally contain functional components, for example, an infrared absorber (d) and a component that improves a film forming property at the time when the ultraviolet absorbing layer is formed, for example, the flexible component (e). As other components, the ultraviolet absorbing layer may further contain additives such as a surface modifier, a defoamer, and a viscosity modifier for the purpose of improving coatability of the liquid composition, and may contain additives such as an adhesion-imparting agent for the purpose of improving adhesion to the substrate surface. Compounding amounts of these additives are preferably such amounts that a ratio of each of the additive components becomes 0.01 to 2 parts by mass to the total 100 parts by mass of the silicon oxide-based matrix component (b) and the flexible component (e). Further, the ultraviolet absorbing layer may contain a dye, a pigment, a filler, and so on within a range not impairing the object of the present invention.

### (Infrared absorber (d))

The infrared absorber (d) is not particularly limited as long as it is a compound having a function of absorbing light in the infrared wavelength range. Specific examples of the infrared absorber (d) include one or more selected from a composite tungsten oxide, antimony-doped tin oxide (ATO), and tin-doped indium oxide (ITO). These infrared absorbers (d) are used in the form of fine particles.

Specific examples of the composite tungsten oxide include a composite tungsten oxide represented by the general formula: MₓW_{y}O_{z} (where the M element is one kind of element or more selected from Cs, Rb, K, Tl, In, Ba, Li, Ca, Sr, Fe, and Sn, W is tungsten, O is oxygen, 0.001 ≤ x/y ≤ 1.0, and 2.2 ≤ z/y ≤ 3.0). The composite tungsten oxide represented by the above general formula functions effectively as the infrared absorber since a sufficient amount of free electrons are generated therein.

Incidentally, fine particles of the composite tungsten oxide represented by the above general formula: MₓW_{y}O_{z} preferably include one crystal structure or more selected from hexagonal, tetragonal, and cubic crystal structures since the fine particles having the hexagonal, tetragonal, or cubic crystal structure are excellent in durability. In such a crystal structure, an amount (x) of the M element added is not less than 0.001 nor more than 1.0 in terms of a value of x/y which is its molar ratio to an amount (y) of tungsten, and an oxygen abundance (z) is not less than 2.2 nor more than 3.0 in terms of a value of z/y which is its molar ratio to the amount (y) of the tungsten.

The value of x/y is preferably about 0.33. This is because a value of x/y theoretically calculated from the hexagonal crystal structure is 0.33, and the composite tungsten oxide fine particles exhibit a preferable optical property by the composite tungsten oxide containing the M element in such an amount that the value of x/y becomes around this value. Specific examples of such a composite tungsten oxide include Cs_{0.33}WO₃, Rb_{0.33}WO₃, K_{0.33}WO₃, and Ba_{0.33}WO₃. However, the composite tungsten oxide used in the present invention is not limited to these, and those in which the values of x/y and z/y fall within the aforesaid ranges have effective infrared absorbing properties.

Such a composite tungsten oxide is an infrared absorber that is known as having transmittance whose maximum value is in a wavelength range of 400 to 700 nm and whose minimum value is in a wavelength range of 700 to 1800 nm, in a film in which the fine particles of the composite tungsten oxide are uniformly dispersed.

The fine particles of the composite tungsten oxide represented by the above general formula: MₓW_{y}O_{z} can be manufactured by a conventionally known method. For example, a tungsten compound starting raw material in which an aqueous solution of ammonium tungstate or a tungsten hexachloride solution is mixed with an aqueous solution of chloride salt, nitrate, sulfate, oxalate, oxide, or the like of the element M at a predetermined ratio is used, and these are heat-treated in an inert gas atmosphere or a reducing gas atmosphere, whereby the composite tungsten oxide fine particles are obtained.

The surfaces of the composite tungsten oxide fine particles are preferably covered with an oxide of a metal selected from Si, Ti, Zr, Al, and the like from a viewpoint of improving weather resistance. A covering method is not particularly limited, but it is possible to cover the surfaces of the composite tungsten oxide fine particles by adding alkoxide of the aforesaid metal to a solution in which the composite tungsten oxide fine particles are dispersed.

As the aforesaid ATO fine particles and ITO fine particles, those prepared by any of various conventionally known preparation methods exemplified as follows can be used without any limitation: physical methods of obtaining them by pulverizing metal powder, such as a mechanochemical method; chemical dry methods such as a CVD method, a vapor deposition method, a sputtering method, a thermal plasma method, and a laser method; and methods called chemical wet methods such as a thermal decomposition method, a chemical reduction method, an electrolysis method, an ultrasonic method, a laser ablation method, a supercritical fluid method, and a microwave synthesis method. Further, a crystal system of these fine particles is not limited to a typical cubic crystal, and depending on the kind of the hydrolyzable silane compound (Rb) in the aforesaid liquid composition, hexagonal ITO whose infrared absorbing ability is relatively low is usable as required, for instance.

As the infrared absorber (d), the composite tungsten oxide fine particles, the ATO fine particles, and the ITO fine particles described above each may be used alone or a mixture of two kinds or more of these may be used. In the present invention, the ITO fine particles are preferably used from viewpoints of transmittance loss and environmental safety. Further, a combination of at least one kind selected from the aforesaid composite tungsten oxide fine particles, ATO fine particles, and ITO fine particles with infrared absorbing fine particles other than these may be used as the infrared absorber (d).

The average primary particle diameter of the fine particles of the infrared absorber (d) is preferably 100 nm or less, more preferably 50 nm or less, and particularly preferably 30 nm or less. Setting the average primary particle diameter to 100 nm or less prevents an increase of the tendency that the fine particles aggregate with one another in the liquid composition used for producing the ultraviolet absorbing layer, and thus facilitates avoiding the sedimentation of the fine particles. Further, the fine particles of the infrared absorber (d) may aggregate to a certain degree in the liquid composition, but their average dispersed particle diameter is preferably 200 nm or less, more preferably 150 nm or less, and especially preferably 100 nm or less.

In the case where the ultraviolet absorbing layer contains the fine particles of the infrared absorber (d), the fine particles of the infrared absorber (d) preferably have the aforesaid average primary particle diameter and average dispersed particle diameter, because this can reduce the occurrence of haze (increase of haze) caused by scattering and maintain transparency. A lower limit of the average primary particle diameter is not particularly limited, and about 2 nm diameter fine particles of the infrared absorber (d) which can be manufactured by the current technology are also usable. Here, the average primary particle diameter of the fine particles refers to that measured in images observed with a transmission electron microscope. A lower limit of the average dispersed particle diameter is not particularly limited either. The average dispersed particle diameter refers to that measured by a dynamic scattering method using a particle size distribution measuring instrument (manufactured by Microtrac Inc.: Nanotrac150).

The content of the infrared absorber (d) in the ultraviolet absorbing layer is preferably 1 to 80 parts by mass, more preferably 5 to 60 parts by mass, and especially preferably 5 to 40 parts by mass to the total 100 parts by mass of the silicon oxide-based matrix component (b) and the flexible component (e), in order for the layer to have sufficient infrared absorbing ability and mechanical strength.

In view of achieving sufficient dispersibility in the aforesaid liquid composition, the aforesaid inorganic fine particles used as the infrared absorber (d) are preferably compounded in the liquid composition while being in a state of a dispersion which is prepared by dispersing the inorganic fine particles in a dispersion medium in advance. An aggregation state of the fine particles of the infrared absorber (d) in the ultraviolet absorbing layer reflects their aggregation state in the liquid composition and furthermore in the raw material dispersion, and therefore the fine particles of the infrared absorber (d) are preferably dispersed to a high degree in the dispersion in order to maintain transparency of the ultraviolet absorbing layer. From a viewpoint of this dispersibility, the dispersion in which the fine particles of the infrared absorber (d) are dispersed is preferable a dispersion in which they are dispersed using a later-described dispersing agent. In the case where the ultraviolet absorbing layer thus contains the infrared absorber (d), the ultraviolet absorbing layer typically contains the dispersing agent together with the infrared absorber (d).

In the case where the ultraviolet absorbing layer contains the infrared absorber (d) in addition to the ultraviolet absorber (a), the ultraviolet absorbing layer preferably contains a chelating agent which forms a complex with the infrared absorber (d) in the liquid composition for forming the ultraviolet absorbing layer, the complex exhibiting substantially no absorption of light of a visible wavelength. The following are reasons for this.

Note that "exhibiting substantially no absorption" means that a difference between a value of YI of a film-equipped substrate and a value of YI of only the substrate as measured based on JIS K7105 (1981) is 2.0 or less, the film-equipped substrate being obtained by, for example, forming a film of the liquid composition in which 50 parts by mass of the chelating agent is added to 100 parts by mass of the infrared absorber (d), on the substrate so that an amount of the infrared absorber (d) deposited on the substrate becomes 0.7g/m².

The maximum absorption wavelength of light in the ultraviolet absorbing organic compound contained in the aforesaid ultraviolet absorber (a) is within a range of 325 to 425 nm, and is in a range of about 325 to 390 nm in many cases. The ultraviolet absorbing organic compounds thus having absorbing ability even for ultraviolet rays with relatively long wavelengths are preferably used because of their properties, and it is thought that, by having a phenolic hydroxy group, these compounds undergo chelate bonding with the inorganic fine particles forming the infrared absorber (d) to be likely to color yellow. Therefore, when the chelating agent which together with the infrared absorber (d) forms the complex exhibiting substantially no absorption of the light having the visible wavelength is contained in the liquid composition, in addition to the ultraviolet absorber (a) and the infrared absorber (d), it is possible to hinder the chelate bonding of the ultraviolet absorber (a) and the infrared absorber (d) to prevent the yellow coloring while maintaining the ultraviolet absorbing ability in the ultraviolet absorbing layer.

In the present specification, the dispersing agent is a generic term for compounds that have a function of increasing dispersion stability of the fine particles by having, in at least molecules thereof, portions that are adsorbed on the surfaces of the fine particles and portions extending from the portions, which have been adsorbed on the fine particles, into the dispersion medium (to be part of the solvent in the liquid composition) and making the fine particles stably dispersed in the liquid composition by repulsion of electric charges or steric hindrance that the portions themselves have.

In the present specification, the chelating agent is a generic term for compounds capable of coordinate bonding at a plurality of places of the surfaces of the fine particles in one molecule and that are small in steric hindrance arising from the molecular structure after the adsorption on the fine particles and thus do not have the function of increasing the dispersion stability of the fine particles. The dispersing agent and the chelating agent are both adsorbed on the surfaces of the fine particles, but are different in that the dispersing agent has the function of increasing the dispersion stability, while the chelating agent does not have this function.

A molecular weight of the chelating agent is preferably 1,000 to 100,000. The molecular weight is more preferably 1,500 to 100,000, and especially preferably 2,000 to 100,000. The chelating agent whose molecular weight is in the above range scarcely bleeds out from the ultraviolet absorbing layer after the formation of the layer, scarcely comes to have a reduced number of its adsorption points to the molecule, and scarcely causes a decrease of hardness of the ultraviolet absorbing layer, even if its amount used is large enough to hinder the chelating bonding of the ultraviolet absorber (a) with the fine particles of the infrared absorber (d) when it is adsorbed and coordinated on the surfaces of the fine particles of the infrared absorber (d) together with the dispersing agent, more specifically even if its amount is 1 to 13 parts by mass to 100 parts by mass of the infrared absorber (d).

The dispersing agent has the portions adsorbed on the surfaces of the fine particles of the infrared absorber (d) and the portions extending into the dispersion medium to stabilize the dispersion. The content of the dispersing agent in the ultraviolet absorbing layer is preferably an appropriate amount high enough to stabilize the dispersion of the fine particles of the infrared absorber (d) in the aforesaid liquid composition, for example, 1 to 13 parts by mass to 100 parts by mass of the infrared absorber (d). Such an appropriate amount of the dispersing agent is not sometimes large enough to fully cover the surfaces of the fine particles of the infrared absorber (d) and to hinder the chelate bonding of the ultraviolet absorber (a). In this case, by the chelating agent being contained in the liquid composition, it is possible to fully cover the surfaces of the fine particles of the infrared absorber (d) and to sufficiently hinder the chelate bonding of the ultraviolet absorber (a) with the fine particles of the infrared absorber (d), owing to the combination of the chelating agent and the dispersing agent.

The content of the chelating agent in the ultraviolet absorbing layer is preferably the aforesaid ratio of 1 to 13 parts by mass to 100 parts by mass of the infrared absorber (d), and may be appropriately adjusted within the above range according to the aforesaid content of the dispersing agent. In the case where the chelating agent having the aforesaid molecular weight is used together with the dispersing agent, the aforesaid content of the chelating agent is such an amount that the bleeding out of the chelating agent from the ultraviolet absorbing layer is difficult to occur while the chelate bonding of the ultraviolet absorber (a) with the fine particles of the infrared absorber (d) in the liquid composition is sufficiently hindered.

Specifically, the chelating agent is preferably a chelating agent soluble in a later-described solvent used in the liquid composition, specifically a solvent containing water and preferably alcohol. Specific examples of such a chelating agent include a polymer preferably within the aforesaid molecular weight range which is obtained using one kind or more selected from maleic acid, acrylic acid, and methacrylic acid as monomers. The polymer may be a homopolymer or may be a copolymer. In the present invention, polymaleic acid and polyacrylic acid are preferably used. One kind out of these may be used alone, or a combination of two kinds or more of these may be used.

In the present invention, it is possible to use commercially available products as the aforesaid chelating agent. Examples of the commercially available products include Nonporu PMA-50W (trade name, manufactured by NOF Corporation, molecular weight: 1,200, an aqueous solution whose solid content is 40 to 48 mass%) and the like, as polymaleic acid, and AQUALIC HL (trade name, manufactured by Nippon Shokubai Co., Ltd., molecular weight: 10,000, an aqueous solution whose solid content is 45.5 mass%) and the like, as polyacrylic acid.

### (Flexible component (e))

The flexible component (e) can contribute to reducing the occurrence of crack in the ultraviolet absorbing layer. Especially in a case where the hydrolyzable silane compound (Rb) is made of only the tetrafunctional hydrolyzable silane compound, flexibility of the ultraviolet absorbing layer is not sufficient in some case. By the liquid composition containing the flexible component (e) together with the tetrafunctional hydrolyzable silane compound, it is possible to easily produce the ultraviolet absorbing layer excellent both in mechanical strength and crack resistance.

Examples of the flexible component (e) include: various kinds of organic resins such as a silicone resin, an acrylic resin, a polyester resin, a polyurethane resin, a hydrophilic organic resin containing a polyoxyalkylene group, and an epoxy resin; and an organic compound such as glycerin. In the case where the organic resin is used as the flexible component (e), the organic resin is preferably in a liquid form, a fine particle form, or the like. The organic resin may also be a curable resin that cures as the hydrolyzable silane compound (Rb) is cured by heating when the ultraviolet absorbing layer is formed using the liquid composition containing this organic resin. In this case, part of the hydrolyzable silane compound (Rb) and the curable resin which is the flexible component (e) may partially react to be cross-linked to an extent not hindering the properties of the obtained film.

Preferable examples of the silicone resin out of the flexible components (e) include silicone oils including various kinds of modified silicone oils, and silicone rubber resulting from partial or total cross-linking of diorganosilicone terminally containing a hydrolyzable silyl group or a polymerizable group-containing organic group.

Preferable examples of the hydrophilic organic resin containing the polyoxyalkylene group include polyethylene glycol (PEG) and polyether phosphate ester-based polymer.

Preferable examples of the polyurethane resin include polyurethane rubber, and preferable examples of the acrylic resin include acrylonitrile rubber, a homopolymer of (meth)acrylic acid alkyl ester, and a copolymer of (meth)acrylic acid alkyl ester and a monomer copolymerizable with the (meth)acrylic acid alkyl ester. As the monomer copolymerizable with the (meth)acrylic acid alkyl ester, usable are hydroxyalkyl ester of (meth)acrylic acid, (meth)acrylic acid ester having a polyoxyalkylene group, (meth)acrylic acid ester having a partial structure of the ultraviolet absorber, (meth)acrylic acid ester having a silicon atom, and so on.

In the case where the epoxy resin is used as the flexible component (e), a combination of polyepoxides and a curing agent is preferably used, or polyepoxides are preferably used alone. Polyepoxides are a generic term for compounds having a plurality of epoxy groups. Specifically, an average number of the epoxy groups of the polyepoxides is two or more, and in the present invention, polyepoxides in which the average number of the epoxy groups is two to ten are preferable.

As such polyepoxided, polyglycidyl compounds such as a polyglycidyl ether compound, a polyglycidyl ester compound, and a polyglycidyl amine compound are preferable. Further, the polyepoxides may be any of aliphatic polyepoxides and aromatic polyepoxides, and the aliphatic polyepoxides are preferable.

Among these, the polyglycidyl ether compound is preferable, and the aliphatic polyglycidyl ether compound is especially preferable. The polyglycidyl ether compound is preferably glycidyl ether of bifunctional or higher functional alcohol, and is especially preferably glycidyl ether of trifunctional or higher functional alcohol because it can improve light resistance. These alcohols are preferably aliphatic alcohols, alicyclic alcohols, or sugar alcohols.

Specific examples of the polyglycidyl ether compound include ethylene glycol diglycidyl ether, polyethylene glycol diglycidyl ether, propylene glycol diglycidyl ether, polypropylene glycol diglycidyl ether, neopentyl glycol diglycidyl ether, glycerol polyglycidyl ether, diglycerol polyglycidyl ether, polyglycerol polyglycidyl ether, trimethylolpropane polyglycidyl ether, sorbitol polyglycidyl ether, any pentaerythritol polyglycidyl ether. One kind out of these may be used alone or a combination of two kinds or more of these may be used.

Among these, polyglycidyl ethers (having more than two glycidyl groups (epoxy groups) per molecule on average) of aliphatic polyol having three or more hydroxy groups, such as glycerol polyglycidyl ether, diglycerol polyglycidyl ether, polyglycerol polyglycidyl ether, and sorbitol polyglycidyl ether are especially preferable because they can improve light resistance. One kind out of these may be used alone or a combination of two kinds or more of these may be used.

In the present invention, among the aforesaid flexible components (e), the epoxy resin, in particular, the polyepoxides, PEG, glycerin, and the like are preferable because they can impart sufficient flexibility to the ultraviolet absorbing layer while maintaining mechanical strength. Moreover, the aforesaid epoxy resin, in particular, the polyepoxide, PEG, glycerin, and the like not only have a function of preventing the occurrence of crack caused by long-term light irradiation but also have a function of reducing deterioration of various functions such as ultraviolet absorption and infrared absorption while maintaining colorless transparency of the ultraviolet absorbing layer. Note that in the present invention, the polyepoxides are especially preferable among these.

The content of the flexible component (e) in the ultraviolet absorbing layer is not particularly limited, and may be any amount large enough to impart flexibility to the obtained film to improve crack resistance without impairing the effect of the present invention, and this content is preferably such an amount that its ratio becomes 0.1 to 100 parts by mass, more preferably 1.0 to 50 parts by mass to 100 parts by mass of the silicon oxide-based matrix component (b).

### (Formation of ultraviolet absorbing layer: manufacture of glass article)

The following method including the following (A) step to (C) step is an example of a method for forming the ultraviolet absorbing layer containing the aforesaid essential components and the optional components as required, on the surface of the glass substrate in order to obtain the glass article of the present invention.

(A) a liquid composition preparing step of preparing the liquid composition which contains the aforesaid essential components and, when necessary, the optional components as they are or as their raw material components and further contains the solvent,
(B) a coating film forming step of forming the coating film by applying the liquid composition on the film formation surface of the glass substrate, and
(C) a curing step of removing volatile components such as the solvent from the obtained coating film as required, and heating the coating film to a temperature at which the hydrolyzable silane compound mainly composed of the hydrolyzable silane compound (Rb) cures, to cure the coating film.

### (A) Liquid composition preparing step

The liquid composition contains, as its solid content, the essential components, namely, the ultraviolet absorber (a) or the reactive ultraviolet absorber (Ra) (in the description below, the term "ultraviolet absorber (a)" includes the reactive ultraviolet absorber (Ra)), the raw material component of the silicon oxide-based matrix component (b), for example, the hydrolyzable silane compound (Rb), and the hollow particles (c), and further contains the optional components, namely, the ultraviolet absorber (d), the flexible component (e), the dispersing agent, the chelating agent, and so on, with their contents being appropriately adjusted within the above-described ranges.

In order to apply the above components uniformly on the glass substrate, the liquid composition is a composition which is prepared in the liquid form by adding the solvent to these components. The contents of the components to the aforesaid total solid content in the liquid composition correspond to the contents of the components in the ultraviolet absorbing layer.

### (Solvent)

The liquid composition typically contains, as the solvent, water for hydrolyzing the hydrolyzable silane compound (Rb) or the like, and an organic solvent. The organic solvent means: a solvent which is compatible with the water and in which the components such as the ultraviolet absorber (a), the hydrolyzable silane compound (Rb), and the flexible component (e) are dissolved; and a dispersion medium in which the solid fine particles such as the hollow particles (c) and the ultraviolet absorber (d) are dispersed, and refers to an organic compound with a relatively low boiling point which takes on a liquid form at room temperature. The organic solvent is made of an organic compound such as alcohol, and may be a mixture of two kinds or more.

Further, the dispersion medium and the solvent may be the same organic solvent, or may be different organic solvents. In the case where the dispersion medium and the solvent are different, the organic solvent in the liquid composition is a mixture of these dispersion medium and solvent. In this case, the dispersion medium and the solvent that are compatible with each other are combined in order for the mixture to be homogeneous.

In the case where the compounded components such as the ultraviolet absorber (a), the hydrolyzable silane compound (Rb), the flexible component (e), the hollow particles (c), and the infrared absorber (d) are provided in a state of a solution or a dispersion, the solvent and the dispersion medium may be used as they are as part of the organic solvent or the water of the liquid composition without being removed.

The content of the water in the liquid composition is calculated as an amount of the water that is added by itself or as an amount including an amount of the water thus added together with the various components. The amount of the water contained in the liquid composition is not particularly limited, as long as it is an amount large enough to hydrolyze and (co-)condense the contained hydrolyzable silicon compound. Specifically, this amount is preferably such an amount that its molar ratio becomes one to twenty equivalents, more preferably four to eighteen equivalents, relative to a SiO₂ equivalent amount of the contained hydrolyzable silicon compound. If the amount of the water is less than one equivalent in terms of the aforesaid molar ratio, the hydrolysis is difficult to progress, and on some substrate, the liquid composition may be repelled when applied, or haze may increase. If the amount of the water is more than twenty equivalents, the hydrolysis rate becomes fast, and long-term storability may become insufficient.

Specific examples of the organic solvent include ketones such as acetone, methyl ethyl ketone, methyl isobutyl ketone, cyclohexanone, and acetylacetone; ethers such as tetrahydrofuran, 1,4-dioxane, 1,2-dimethoxyethane, propylene glycol monomethyl ether, dipropylene glycol monomethyl ether, and diisopropyl ether; esters such as ethyl acetate, butyl acetate, isobutyl acetate, and methoxyethyl acetate; alcohols such as methanol, ethanol, 1-propanol, 2-propanol, 1-butanol, 2-butanol, 2-methyl-1-propanol, 2-methoxyethanol, 4-methyl-2-pentanol, 2-butoxyethanol, 1-methoxy-2-propanol, 2-ethoxyethanol, and diacetone alcohol; hydrocarbons such as n-hexane, n-heptane, isoctane, benzene, toluene, xylene, gasoline, light oil, and kerosene; acetonitrile and nitromethane.

These each may be used alone, or a combination of two kinds or more of these may be used. Further, an amount of the organic solvent used is appropriately adjusted according to the kinds, the compounding ratios, and so on of the various components contained as the solid contents in the liquid composition.

In order to obtain a state in which the components contained in the liquid composition are stably dissolved or dispersed, the organic solvent contains at least 20 mass% or more, preferably 50 mass% or more of alcohol. Preferable examples of the alcohol used in such an organic solvent include methanol, ethanol, 1-propanol, 2-propanol, 1-butanol, 2-butanol, 2-methyl-1-propanol, 1-methoxy-2-propanol, 2-ethoxyethanol, 4-methyl-2-pentanol, and 2-butoxyethanol, and among them, alcohol whose boiling point is 80 to 160°C is preferable because the aforesaid silicon oxide matrix raw material component is highly soluble therein and it has good coatability on the substrate. Specifically, ethanol, 1-propanol, 2-propanol, 1-butanol, 2-butanol, 2-methyl-1-propanol, 1-methoxy-2-propanol, 2-ethoxyethanol, 4-methyl-2-pentanol, and 2-butoxyethanol are preferable.

In the case where, for example, the liquid composition contains the partially hydrolyzed (co-)condensate of the hydrolyzable silane compound, lower alcohol or the like which is produced in its manufacturing process in accordance with the hydrolysis of the raw material hydrolyzable silane compound (for example, silanes having an alkoxy group), or alcohol or the like used as the solvent may be contained as it is as the organic solvent used in the liquid composition.

Further, in the liquid composition, other organic solvent except alcohol, miscible with water/alcohol, may be co-used as an organic solvent other than the above, and examples of such an organic solvent include: the aforesaid ketones such as acetone and acetylacetone; esters such as ethyl acetate and isobutyl acetate; and ethers such as propylene glycol monomethyl ether, dipropylene glycol monomethyl ether, and diisopropyl ether.

An amount of the solvent contained in the liquid composition is preferably such an amount that the total solid content concentration in the liquid composition made of the solvent and the solid content becomes 3.5 to 50 mass%, and more preferably 9 to 30 mass%. Setting the amount of the solvent in the liquid composition within the aforesaid range improves workability.

It is possible to prepare the liquid composition by uniformly mixing the components including the aforesaid solvent. A mixing method is not particularly limited. In mixing the liquid composition, in a case where the hydrolyzable silane compound such as the hydrolyzable silane compound (Rb) is prepared as monomers, the mixing is preferably performed under a condition causing the hydrolyzable silane compound to be partially hydrolyzed and (co-)condensed. The mixing method may be a method of partially hydrolyzing and (co-)condensing the hydrolyzable silane compound in the solvent and adding the other components such as the ultraviolet absorber (a) to the obtained solution, or may be a method of partially hydrolyzing and (co-)condensing the hydrolyzable silane compound in the presence of the components other than the infrared absorber (d) and thereafter compounding the dispersion of the infrared absorber (d).

For example, the liquid composition containing the ultraviolet absorber (a), the hydrolyzable silane compound (Rb), the hollow particles (c), the solvent, the infrared absorber (d), the flexible component (e), the dispersing agent, and the chelating agent can be prepared by a method including the following step (1) and step (2).

Step (1): a dispersion preparing step of preparing the dispersion by mixing the infrared absorber (d), the dispersing agent, and the dispersion medium (corresponding to part or the whole of the organic solvent), and
Step (2): a mixing step of mixing the dispersion obtained in the step (1), the ultraviolet absorber (a), the chelating agent, the hydrolyzable silane compound (Rb), the hollow particles (c), the flexible component (e), the water, and the acid catalyst, and in the case where part of the organic solvent is used as the dispersion medium in the step (1), further mixing the remainder of the organic solvent.

The mixing method is not particularly limited, as long as it is a method capable of uniform mixing. Its specific examples include a mixing method by a magnetic stirrer.

Further, in the case where the liquid composition contains the hydrolyzable silicon compound such as the hydrolyzable silicon compound (Rb) as monomers, a process of partially hydrolyzing and (co-)condensing them may be performed in the step (2) in order to stabilize the liquid composition during the storage and so on. The partial hydrolysis and (co-)condensation are preferably performed in the presence of the same acid catalyst as above and under the same reaction condition as above. It is ordinarily possible to achieve the purpose by mixing one kind or more of the hydrolyzable silicon compound monomers as required and thereafter stirring them at 10 to 70°C for a predetermined time in the presence of the acid catalyst.

### (B) Coating film forming step

The liquid composition obtained in the above-described (A) step is applied on the film formation surface of the glass substrate to form the coating film of the liquid composition in the (B) step. Note that the coating film formed here is typically a coating film containing the volatile components such as the organic solvent and the water. A method of applying the liquid composition on the glass substrate is not particularly limited as long as it is a method capable of uniform coating, and any of know methods such as a flow coating method, a dip coating method, a spin coating method, a spray coating method, a flexographic printing method, a screen printing method, a gravure printing method, a roll coating method, a meniscus coating method, and a die coating method is usable. The thickness of the coating film of the coating solution is determined in consideration of the thickness of the finally obtained ultraviolet absorbing layer.

### (C) Curing step

The (C) step performed next is executed under an appropriate condition selected according to the kind of the hydrolyzable silane compound used such as the hydrolyzable silane compound (Rb). That is, in the (C) step, the volatile components such as the organic solvent and the water are removed from the coating film of the liquid composition on the glass substrate as required, and the hydrolyzable silicon compound and other curable component, if contained, are heated and cured, whereby the film as the ultraviolet absorbing layer is formed.

In this case, the removal of the volatile components from the coating film in the (C) step is preferably performed by heating and/or pressure-reduced drying. The formation of the coating film on the glass substrate is preferably followed by temporary drying at a temperature of about room temperature to 120°C from a viewpoint of improving a leveling property of the coating film. Since, during the operation of this temporary drying, the volatile components are usually removed by vaporization simultaneously with the temporary drying, it can be said that the operation for removing the volatile components is included in the temporary drying. The time of the temporary drying, that is, the time of the operation for removing the volatile components is about three seconds to two hours, though depending on the liquid composition used to form the ultraviolet absorbing layer.

At this time, the sufficient removal of the volatile components is preferable, but the complete removal is not necessary. That is, part of the volatile components can remain in the ultraviolet absorbing layer within a range not affecting the performance of the finally obtained ultraviolet absorbing layer. Further, in the case where the heating is performed to remove the volatile components, the heating for removing the volatile components, that is, typically the temporary drying, may be continuously followed by heating performed thereafter in the following manner to cure the hydrolyzable silicon compound and the other curable component, if contained.

The curable components such as the hydrolyzable silicon compound are cured by heating, preferably after the volatile components are removed from the coating film as described above, whereby the ultraviolet absorbing layer is obtained. An upper limit of the heating temperature in this case is preferably 230°C from a viewpoint of economic efficiency and because the coating film contains an organic substance in many cases. In order to obtain the effect of accelerating the reaction by the heating, a lower limit of the heating temperature is preferably 80°C, and more preferably 150°C. Therefore, the heating temperature is preferably within a range of 80 to 230°C, and more preferably within a range of 150 to 230°C. The heating time is preferably several minutes to several hours, though depending on the composition of the liquid composition used to form the ultraviolet absorbing layer.

### [Glass article]

The glass article of the present invention has the glass substrate and the aforesaid ultraviolet absorbing layer formed on at least part of the main surface of the glass substrate. The ultraviolet absorbing layer is not limited to be formed on a specific region of the surface of the glass substrate, and may be formed on a region where it is required, according to the intended use. The region where to form the ultraviolet absorbing layer may be, for example, on one of the main surfaces of the glass substrate or may be on the both main surfaces.

In the glass article of the present invention, the film thickness of the ultraviolet absorbing layer is preferably 1.0 to 7.0 µm, and more preferably 1.5 to 5.5 µm. If the film thickness of the ultraviolet absorbing layer is less than 1.0 µm, it cannot sufficiently exhibit the function of the ultraviolet absorption and the optional infrared absorption. On the other hand, if the film thickness of the ultraviolet absorbing layer is more than 7.0 µm, crack may occur.

By having the ultraviolet absorbing layers on the both main surfaces of the glass substrate respectively, the ultraviolet absorbing layer can have an increased total film thickness, and accordingly can have enhanced functions of the ultraviolet absorption and the optional infrared absorption. The total film thickness of the ultraviolet absorbing layers in the case where the ultraviolet absorbing layers are formed on the both main surfaces of the glass substrate can be 2.0 to 14.0 µm. The above-described ultraviolet absorbing layer according to the present invention has high visible light transmittance even if having a large film thickness. Therefore, even in the case where the ultraviolet absorbing layers are formed on the both main surfaces of the glass substrate as described above, the visible light transmittance in the glass article can be sufficiently high.

If the glass article of the present invention having the above-described ultraviolet absorbing layer, the ultraviolet transmittance measured with a spectrophotometer (manufactured by Hitachi Ltd.: U-4100) is preferably 3.0% or less, more preferably 1.0% or less, and especially preferably 0.5% or less as the ultraviolet transmittance measured according to ISO-9050 (1990).

Further, the visible light transmittance of the glass article of the present invention as measured according to JIS R3212 (1998) is preferably 70% or more, and especially preferably 71.5% or more. The visible light reflectance in the glass article of the present invention as a visible light reflectance measured from the ultraviolet absorbing layer side according to JIS R3106 (1998) is preferably 8% or less, and especially preferably 7% or less. In the glass article of the present invention, the haze value is preferably 1 % or less, and more preferably 0.5% or less.

In the glass article of the present invention, a variation (Tv difference) of the visible light transmittance is preferably -0.4% or more, more preferably -0.2% or more, and especially preferably 0.0% or more, the variation being represented by "Tv(A) - Tv(G)", where "Tv(A)" is the visible light transmittance measured on the glass article according to JIS R3212 (1998) and "Tv(G)" is the visible light transmittance similarly measured on a glass substrate not having the aforesaid ultraviolet absorbing layer in the glass article.

Further, the above-described ultraviolet absorbing layer that the glass article of the present invention has achieves high ultraviolet absorbency and high visible light transmittance with the single-layer film, and is more excellent in abrasion resistance than a structure in which an ordinary ultraviolet absorbing film and a visible light antireflective film are stacked.

In the glass article of the present invention, in the case where the ultraviolet absorbing layer contains the infrared absorber (d) as the optional component, solar radiation transmittance in the glass article of the present invention as measured according to JIS R3106 (1998) is preferably 48.0% or less, more preferably 46.0% or less, and especially preferably 44.0% or less. Further, in this case, in the glass article of the present invention, YI, which is an index of a yellow tint, calculated according to JIS K7105 (1981) is preferably 15 or less, and more preferably 11 or less.

As described above, the glass article of the present invention not only has excellent ultraviolet absorbency but also high visible light transmittance. Therefore, it is applicable to glass articles for outdoor use, for example, window glass for vehicles such as automobiles and window glass for building materials to be attached to architectures such as houses and buildings.

### EXAMPLES

Hereinafter, the present invention will be further described based on examples, but the present invention is not limited to these examples. In the following description, Examples 1 to 4 are the examples and Examples 5 to 7 are comparative examples.

### <Details of commercially available products (trade names) used in Examples>

### (Solvent)

Solmix AP-1: manufactured by Japan Alcohol Trading Co., Ltd., a mixed solvent of ethanol: isopropyl alcohol: methanol = 85.5: 13.4: 1.1 (mass ratio)

### (Flexible component (e))

SR-SEP: manufactured by Sakamoto Yakuhin Kogyo Co., Ltd., sorbitol-based polyglycidyl ether

### (Surface modifier)

BYK-307: manufactured by BYK-Chemie, polyether-modified polydimethylsiloxane

### <Example of preparation of hollow SiO₂ particle dispersion>

While 59 g of isopropanol was stirred, a 30g of aqueous dispersion of ZnO fine particle (solid content concentration: 20 mass%, average primary particle diameter: 30 nm), and 10 g of tetraethoxysilane (SiO₂-equivalent solid content: 29 mass%) were added, thereafter 1 g of 28 mass% aqueous solution of ammonia was added to adjust pH of the dispersion to 10, and they were stirred at 20°C for six hours, whereby 100 g of core-shell fine particle dispersion (solid content concentration: 6 mass%) was obtained.

To the obtained core-shell fine particle dispersion, 100 g of strongly acidic cation exchange resin (manufactured by Mitsubishi Chemical Corporation, DIAION, total exchange capacity: 2.0 mseq/mL or more) was added, and after pH became 4 after one-hour stirring, the strongly acidic cation exchange resin was removed by filtering, and the dispersion was ultrafiltrated, whereby a hollow SiO₂ fine particle dispersion whose SiO₂-equivalent solid content concentration was 15 mass% was obtained. Hollow SiO₂ particles had a 6 nm outer shell thickness (average), a 30 nm inside diameter (average), and a 42 nm primary particle diameter (average).

### <Example of preparation of silylated ultraviolet absorber solution>

In a container, 49.2 g of 2,2',4,4'-tetrahydroxybenzophenone (manufactured by BASF), 123.2 g of 3- glycidoxypropyltrimethoxysilane (manufactured by Shin-Etsu Chemical Co., Ltd.), 0.8 g of benzyltriethylammonium chloride (manufactured by Junsei Chemical Co., Ltd.), and 100 g of butyl acetate (manufactured by Junsei Chemical Co., Ltd.) were prepared, and while being stirred, were increased in temperature to 60°C to be dissolved, and were heated to 120°C to undergo four-hour reaction, whereby a silylated ultraviolet absorber (Ra1) solution with a 63 mass% solid content concentration was obtained.

### (Example 1)

In a container, 12.3 g of the silylated ultraviolet absorber (Ra1) solution, 14.7g of tetraethoxysilane, 4.6 g of the hollow silica particle dispersion, 37.9 g of Solmix AP-1, 19.0 g of pure water, 1.2 g of SR-SEP, 10.2 g of acetic acid, and 0.06 g of BYK-307 were prepared and stirred at 50°C for two hours, whereby a liquid composition 1 whose solid content concentration was 14 mass% was obtained.

Thereafter, by a spin coating method, the liquid composition 1 was applied on highly heat-absorbing green glass (manufactured by Asahi Glass Co., Ltd., size; 10 × 10 mm, thickness; 3.5 mm) whose surface was washed, and dried at 200°C in the atmosphere for thirty minutes, whereby an ultraviolet absorbing layer-equipped glass article 1 was obtained. Properties of the obtained ultraviolet absorbing layer-equipped glass article 1 was evaluated as follows. Table 1 shows the evaluation results together with the compositions of the liquid composition 1 and the ultraviolet absorbing layer.

Note that mass% of the (a) component in the solid content composition (mass%) of each liquid composition shown in Table 1 indicates mass% of a part of the silylated ultraviolet absorber (Ra1) excluding its trimethoxysilyl group, to the total solid content. Further, mass% of the (b) component was calculated as the total mass% of the trimethoxysilyl group part of the silylated ultraviolet absorber (Ra1) and the tetraethoxysilane.

### [Evaluation]

### (Spectral properties)

Spectral properties of the ultraviolet absorbing layer-equipped glass article 1 when it is irradiated with test light from the ultraviolet absorbing layer side were measured with a spectrophotometer (manufactured by Hitachi, Ltd.: U-4100), and its visible light transmittance (Tv [%]) was calculated according to JIS-R3212 (1998), its visible light reflectance (Rv [%]) was calculated according to JIS-R3106 (1998), and its ultraviolet transmittance (Tuv [%]) was calculated according to ISO-9050 (1990).

Further, regarding a highly heat-absorbing green glass plate whose surface was washed, similar to that used in the manufacture of the above-described ultraviolet absorbing layer-equipped glass article 1, when its visible light transmittance (Tv [%]) and its ultraviolet transmittance (Tuv [%]) were measured similarly to the above, Tv [%] was 73.6% and Tuv [%] was 10.6%. A value of Tv [%] of the ultraviolet absorbing layer-equipped glass article 1 from which Tv (%) of the highly heat-absorbing glass plate was subtracted was defined as a Tv difference [%].

### (Film thickness)

The film thickness [µm] of the ultraviolet absorbing layer was measured using a stylus type surface profile measuring instrument (ULVAC: Dektak150).

### (Porosity of ultraviolet absorbing layer)

As "porosity", a ratio (percentage (%)) of the total volume of the hollow portions of the hollow particles (c) to the total volume of the ultraviolet absorbing layer was calculated from the film thickness of the ultraviolet absorbing layer, the content of the hollow particles (c) in the liquid composition, and the shape of the hollow particles (c).

### (Haze)

Haze was measured using a haze meter (manufacture by BYK Gardener Co., Ltd.: Haze Guard Plus).

### (Refractive index)

A given refractive index was input and a film thickness at this time was measured, using an offline thickness measuring system (manufactured by Spectra Co-op: Solid Lamda Thickness). When the measured film thickness was equal to the film thickness measured using the stylus type surface profile measuring instrument, the corresponding input value of the refractive index was defined as a refractive index of the film.

### (Abrasion resistance)

An abrasion test was conducted using a Taber abrasion resistance tester according to the method described in JIS-R3212 (1998), with a CS-10F abrasion wheel, a 4.9 N load, and 1000 rotations, and degrees of scratches before and after the test were measured based on the haze (haze values) and were evaluated based on an increase amount [%] of the haze. For the measurement of the haze, the haze meter (manufactured by BYK Gardner Co., Ltd.: Haze Guard Plus) was used.

### (Example 2)

In a container, 11.6 g of the silylated ultraviolet absorber (Ra1) solution, 13.8 g of tetraethoxysilane, 9.2 g of the hollow silica particle dispersion, 36.8g of Solmix AP-1, 17.9 g of pure water, 1.1 g of SR-SEP, 9.5 g of acetic acid, and 0.06 g of BYK-307 were prepared and stirred at 50°C for two hours, whereby a liquid composition 2 whose solid content concentration was 14 mass% was obtained. Thereafter, an ultraviolet absorbing layer-equipped glass article 2 was obtained in the same manner as in Example 1 except that the liquid composition 2 was used instead of the liquid composition 1. Properties of the obtained ultraviolet absorbing layer-equipped glass article 2 were evaluated as in Example 1. Table 1 shows the evaluation results together with the compositions of the liquid composition 2 and the ultraviolet absorbing layer.

### (Example 3)

In a container, 6.4 g of the silylated ultraviolet absorber (Ra1) solution, 7.7 g of tetraethoxysilane, 46.0 g of the hollow silica particle dispersion, 24.0 g of Solmix AP-1, 9.9 g of pure water, 0.6 g of SR-SEP, 5.3 g of acetic acid, and 0.06 g of BYK-307 were prepared and stirred at 50°C for two hours, whereby a liquid composition 3 whose solid content concentration was 14 mass% was obtained. Thereafter, an ultraviolet absorbing layer-equipped glass article 3 was obtained in the same manner as in Example 1 except that the liquid composition 3 was used instead of the liquid composition 1. Properties of the obtained ultraviolet absorbing layer-equipped glass article 3 were evaluated as in Example 1. Table 1 shows the evaluation results together with the compositions of the liquid composition 3 and the ultraviolet absorbing layer.

### (Example 4)

A liquid composition 3 was prepared in the same manner as in Example 3. An ultraviolet absorbing layer was formed on one main surface of a glass substrate in the same manner as in Example 1 except that the liquid composition 3 was used instead of the liquid composition 1, and was cooled to room temperature. Next, an ultraviolet absorbing layer was formed on the other main surface in the same manner as in Example 1 except that the liquid composition 3 was used instead of the liquid composition 1, whereby a glass article 4 including the ultraviolet absorbing layers on the both surfaces of the glass substrate was obtained. Properties of the obtained ultraviolet absorbing layer-equipped glass article 4 were evaluated as in Example 1. Table 1 shows the evaluation results.

### (Example 5)

In a container, 5.1 g of the silylated ultraviolet absorber (Ra1) solution, 6.1 g of tetraethoxysilane, 55.2 g of the hollow silica particle dispersion, 20.8 g of Solmix AP-1, 8.0 g of pure water, 0.5 g of SR-SEP, 4.2 g of acetic acid, and 0.06 g of BYK-307 were prepared and stirred at 50°C for two hours, whereby a liquid composition 5 whose solid content concentration was 14 mass% was obtained. An ultraviolet absorbing layer-equipped glass article 5 was obtained in the same manner as in Example 1 except that the liquid composition 5 was used instead of the liquid composition 1. Properties of the obtained ultraviolet absorbing layer-equipped glass article 5 were evaluated as in Example 1. Table 1 shows the evaluation results together with the compositions of the liquid composition 5 and the ultraviolet absorbing layer.

### (Example 6)

In a container, 12.8 g of the silylated ultraviolet absorber (Ra1) solution, 15.3 g of tetraethoxysilane, 40.0 g of Solmix AP-1,19.9 g of pure water, 1.3 g of SR-SEP, 10.6 g of acetic acid, and 0.06 g of BYK-307 were prepared and stirred at 50°C for two hours, whereby a liquid composition 6 whose solid content concentration was 14 mass% was obtained. An ultraviolet absorbing layer-equipped glass article 6 was obtained in the same manner as in Example 1 except that the liquid composition 6 was used instead of the liquid composition 1. Properties of the obtained ultraviolet absorbing layer-equipped glass article 6 were evaluated as in Example 1. Table 1 shows the evaluation results together with the compositions of the liquid composition 6 and the ultraviolet absorbing layer.

### (Example 7)

In a container, 12.8 g of the silylated ultraviolet absorber (Ra1) solution, 15.3 g of tetraethoxysilane, 40.0 g of Solmix AP-1, 19.9 g of pure water, 1.3 g of SR-SEP, 10.6 g of acetic acid, and 0.06 g of BYK-307 were prepared and stirred at 50°C for two hours, whereby a liquid composition 7-1 whose solid content concentration was 14 mass% was obtained. Further, 84.7 g of Solmix AP-1, 1.87 g of tetraethoxysilane, 10.5 g of the hollow silica particle dispersion, 1.23 g of 10 mass% of nitric acid, and 1.7 g of pure water were prepared and stirred at 50°C for two hours, whereby a liquid composition 7-2 for overcoating was obtained.

Thereafter, by a spin coating method, the liquid composition 7-1 was applied on highly heat-absorbing green glass (manufactured by Asahi Glass Co., Ltd., size; 10 x 10 mm, thickness; 3.5 mm) whose surface was washed, similar to that used in Example 1, was dried at 100°C in the atmosphere for thirty minutes, and was cooled to room temperature. Thereafter, the liquid composition 7-2 was further applied by a spin coating method and was dried at 200°C in the atmosphere for thirty minutes, whereby an ultraviolet absorbing layer-equipped glass article 7 having an overcoat layer on the ultraviolet absorbing layer was obtained.

Properties of the obtained ultraviolet absorbing layer-equipped glass article 7 were evaluated as in Example 1. Table 1 shows the evaluation results together with the compositions of the liquid composition 7-1 and the ultraviolet absorbing layer. Note that the film thicknesses in the ultraviolet absorbing layer-equipped glass article 7 indicate the film thickness of the ultraviolet absorbing layer and the film thickness of the overcoat layer respectively. Further, in the columns of the refractive index and the porosity of the ultraviolet absorbing layer in Table 1, refractive indexes and porosities measured or calculated for the ultraviolet absorbing layer and the overcoat layer are written. In the columns of the ultraviolet absorbing layer of Example 7 in Table 1, the values before "/" are physical property values of the ultraviolet absorbing layer, and the values after "/" are physical property values of the overcoat layer. In Table 1 "Present*" means presence of a hollow silica-containing layer as the overcoat layer.

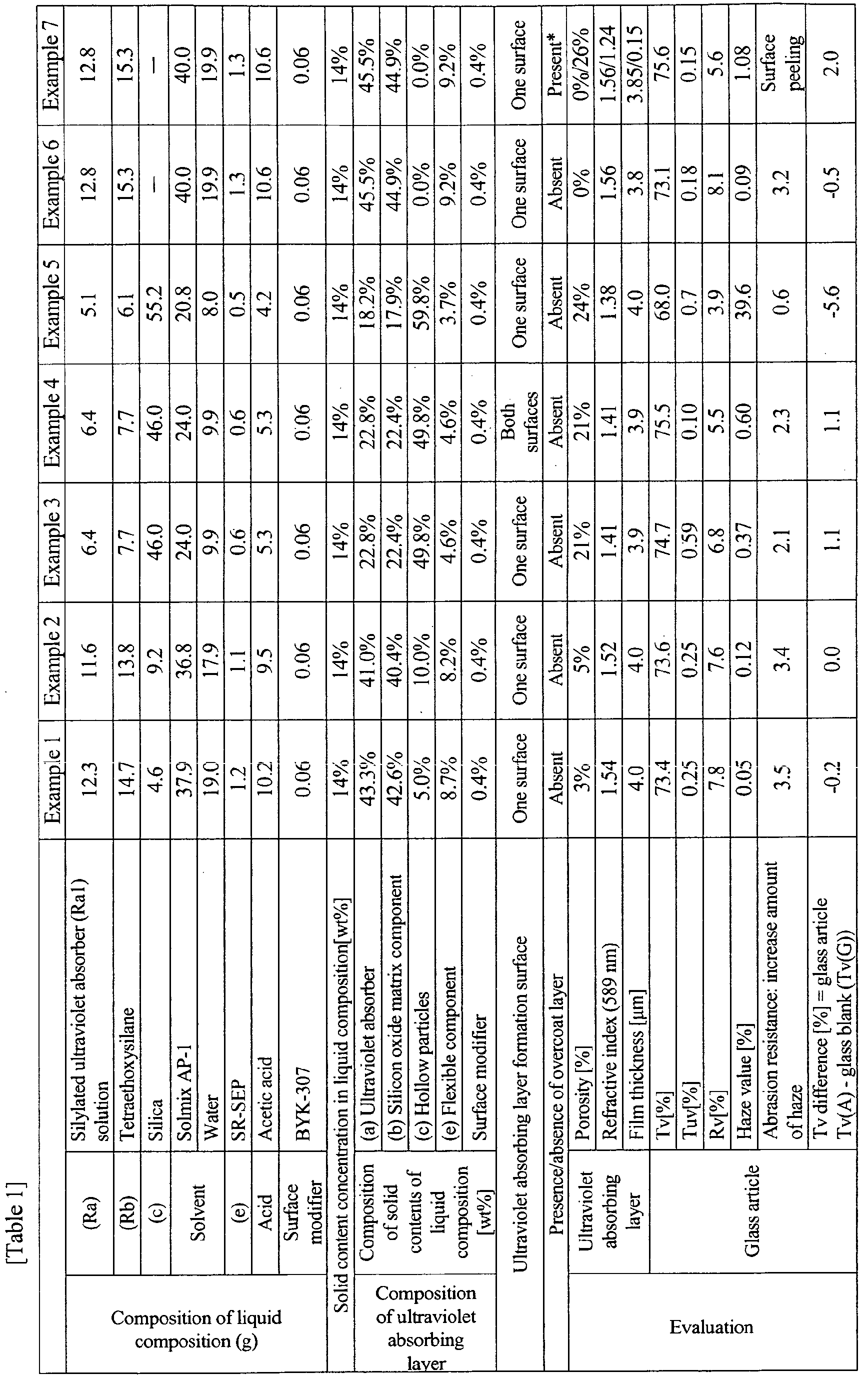

The glass article of the present invention has excellent ultraviolet absorbency and also has high visible light transmittance. Therefore, it is applicable to glass articles for outdoor use, for example, window glass for vehicles such as automobiles and window glass for building materials to be attached to architectures such as houses and buildings.

## Claims

1. A glass article comprising:
a glass substrate; and
an ultraviolet absorbing layer provided on at least part of a main surface of the glass substrate, and the layer containing an ultraviolet absorber (a) including one or more selected from the group consisting of a benzophenone-based compound, a triazine-based compound, and a benzotriazole-based compound, a silicon oxide-based matrix component (b), and hollow particles (c) each having an outer shell and a hollow portion surrounded by the outer shell,
wherein a content of the hollow particles (c) is 55 mass% or less to the total mass of the ultraviolet absorbing layer, and a total volume of the hollow portions which the hollow particles (c) have is 1% or more to a total volume of the ultraviolet absorbing layer.

2. The glass article according to claim 1, wherein a primary particle diameter of the hollow particles (c) is 5 to 150 nm, and a thickness of the outer shells of the hollow particles (c) as represented by (the primary particle diameter - a diameters of the hollow portions)/2 is 1 to 20 nm.

3. The glass article according to claim 1 or 2, wherein a material of the outer shells of the hollow particles (c) comprising at least one selected from the group consisting of a silica, a polymer, and a metal oxide.

4. The glass article according to any one of claims 1 to 3, further containing an infrared absorber (d) including one or more selected from the group consisting of a tin-doped indium oxide, an antimony-doped tin oxide, and a composite tungsten oxide.

5. The glass article according to any one of claims 1 to 4, comprising the ultraviolet absorbing layers on both main surfaces of the glass substrate.

6. The glass article according to any one of claims 1 to 5, wherein the silicon oxide-based matrix component (b) is a cured product of a hydrolyzable silicon compound (Rb) including a tetrafunctional alkoxysilane compound.

7. The glass article according to any one of claims 1 to 6, wherein the ultraviolet absorbing layer further contains polyepoxides.

8. The glass article according to any one of claims 1 to 7, wherein visible light transmittance measured according to JIS R3212 (1998) is 70% or more, and ultraviolet transmittance measured according to ISO-9050 (1990) is 3% or less.

9. The glass article according to any one of claims 1 to 8, wherein the ultraviolet absorbing layer has a thickness of 1.0 to 7.0 µm.
